(19) **Europäisches Patentamt / European Patent Office / Office européen des brevets**

(11) **EP 4 231 694 B1**

(12) **EUROPEAN PATENT SPECIFICATION**

(45) Date of publication and mention of the grant of the patent:
**21.01.2026 Bulletin 2026/04**

(21) Application number: **21879542.5**

(22) Date of filing: **15.10.2021**

(51) International Patent Classification (IPC):
*H04L 5/00* *(2006.01)*    *H04W 64/00* *(2009.01)*
*H04W 8/24* *(2009.01)*    *H04W 48/12* *(2009.01)*

(52) Cooperative Patent Classification (CPC):
**H04W 64/00; H04L 5/005; H04L 5/0092;**
H04W 8/24; H04W 48/12

(86) International application number:
**PCT/CN2021/124125**

(87) International publication number:
**WO 2022/078501 (21.04.2022 Gazette 2022/16)**

(54) **MEASUREMENT CONFIGURATION METHOD, MEASUREMENT METHOD, NETWORK DEVICE AND TERMINAL**

MESSKONFIGURATIONSVERFAHREN, MESSVERFAHREN, NETZWERKVORRICHTUNG UND ENDGERÄT

PROCÉDÉ DE CONFIGURATION DE MESURAGE, PROCÉDÉ DE MESURAGE, DISPOSITIF DE RÉSEAU ET TERMINAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.10.2020 CN 202011112946**

(43) Date of publication of application:
**23.08.2023 Bulletin 2023/34**

(73) Proprietor: **Datang Mobile Communications Equipment Co., Ltd.**
**Beijing 100085 (CN)**

(72) Inventors:
• **REN, Bin**
**Beijing 100085 (CN)**
• **DA, Ren**
**Beijing 100085 (CN)**

(74) Representative: **Maiwald GmbH**
**Engineering**
**Elisenhof**
**Elisenstrasse 3**
**80335 München (DE)**

(56) References cited:
WO-A1-2020/066103    WO-A1-2020/191646
CN-A- 106 664 591    CN-A- 111 465 101
US-A1- 2017 171 857    US-A1- 2020 154 449

• **QUALCOMM INCORPORATED: "Potential Enhancements for NR Rel-17 Positioning", vol. RAN WG1, no. e-Meeting; 20200817 - 20200828, 8 August 2020 (2020-08-08), XP052348182, Retrieved from the Internet <URL:https://ftp.3gpp.org/tsg_ran/WG1_RL1/TSGR1_102-e/Docs/R1-2006810.zip R1-2006810.docx> [retrieved on 20200808]**
• **VIVO: "Discussion on potential positioning enhancements", vol. RAN WG1, no. e-Meeting; 20200817 - 20200828, 8 August 2020 (2020-08-08), XP052346755, Retrieved from the Internet <URL:https://ftp.3gpp.org/tsg_ran/WG1_RL1/TSGR1_102-e/Docs/R1-2005381.zip R1-2005381 enhancements.docx> [retrieved on 20200808]**

EP 4 231 694 B1

**(Cont. next page)**

- CATT: "Discussion of NR positioning enhancements", 3GPP DRAFT; R1-2007860, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20201026 - 20201113, 17 October 2020 (2020-10-17), Mobile Competence Centre ; 650, route des Lucioles ; F-06921 Sophia-Antipolis Cedex ; France
, XP051939940

## Description

### TECHNICAL FIELD

The present disclosure relates to the field of communication technologies, and in particular to a measurement configuration method, a measurement method, a network device and a terminal.

### BACKGROUND

At present, for a downlink positioning reference signal (PRS), a user equipment (UE, or referred as a terminal) is only allowed to process a periodic PRS within a measurement gap. However, there is no solution for processing an aperiodic downlink PRS or a semi-persistent downlink PRS within a measurement gap. If the aperiodic downlink PRS or semi-persistent downlink PRS is measured within a periodically configured measurement gap, there may be following problems: in case that the aperiodic downlink PRS or semi-persistent downlink PRS does not fall within a time range of the periodic measurement gap, the UE cannot process the downlink PRS; or, since the current measurement gap occurs periodically and a minimum period is 20ms, the UE needs to wait for the measurement gap, resulting in that positioning delay is limited by the period of measurement gap, which cannot meet requirements of low positioning delay. WO2020/191646A1 discloses wireless positioning measurement. "Potential Enhancements for NR Rel-17 Positioning" (R1-2006810) discusses potential enhancements that the NR Rel-17 SI on positioning should study further. "Discussion on potential positioning enhancements" (R1-2005381) discusses potential positioning enhancements.

### SUMMARY

The invention is set out in the appended set of claims. The present disclosure provides a measurement configuration method, a measurement method, a network device and a user equipment (UE), which can solve the problem that there is no solution for processing an aperiodic downlink PRS or a semi-persistent downlink PRS within a measurement gap.

In order to achieve the above object, embodiments of the present disclosure are achieved as follows.

According to a first aspect, one embodiment of the present disclosure provides a measurement configuration method, performed by a network device, including:

configuring for a user equipment (UE), as claimed, a target measurement gap for an aperiodic downlink PRS or a semi-persistent downlink PRS; wherein the target measurement gap is an aperiodic measurement gap or a semi-persistent measurement gap.

The method further includes:

determining , as claimed, the target measurement gap according to target information, wherein the target information is , as claimed, UE positioning measurement capability information reported by the UE; or wherein the target information is historical data information reported by the UE.

Optionally, a time unit of the target measurement gap is associated with the UE positioning measurement capability information reported by the UE;

the time unit of the target measurement gap is sub-frame, slot, or orthogonal frequency division multiplexing (OFDM) symbol.

Optionally, configuring for the UE, the target measurement gap for the aperiodic downlink PRS or semi-persistent downlink PRS, includes:

transmitting a configuration parameter of the target measurement gap to the UE;
and/or,
configuring a target duration of the aperiodic downlink PRS or semi-persistent downlink PRS for the UE; wherein the target duration is a sub-frame, slot or OFDM symbol where the aperiodic downlink PRS or semi-persistent downlink PRS is located, and the target measurement gap is configured by configuring the target duration.

Optionally, the transmitting the configuration parameter of the target measurement gap to the UE, includes:
transmitting the configuration parameter of the target measurement gap to the UE through first signaling; wherein the first signaling is LTE positioning protocol (LPP) signaling, radio resource control (RRC) signaling, medium access control control element (MAC-CE) signaling or downlink control information (DCI) signaling.

Optionally, in case that the target measurement gap is the aperiodic measurement gap for the aperiodic downlink PRS, the transmitting the configuration parameter of the target measurement gap to the UE, includes:

determining a minimum value of starting moments of aperiodic downlink positioning reference signal PRS resource sets from all downlink cells, as a first starting moment of the aperiodic measurement gap;
determining a maximum value of end moments of the aperiodic downlink PRS resource sets from all downlink cells, as a first end moment of the aperiodic measurement gap;
transmitting a first configuration parameter of the aperiodic measurement gap to the UE;
wherein the first configuration parameter includes: any two of the first starting moment, the first end moment and a first duration; and the first duration is a duration from the first starting moment to the first end moment.

Optionally, in case that the target measurement gap is the semi-persistent measurement gap for the semi-persistent downlink PRS, the transmitting the configuration parameter of the target measurement gap to the UE, includes:

in one semi-persistent downlink PRS period, determining a minimum value of starting moments of semi-persistent downlink PRS resource sets from all downlink cells, as a second starting moment of the semi-persistent measurement gap;
in the semi-persistent downlink PRS period, determining a maximum value of end moments of semi-persistent downlink PRS resource sets from all downlink cells, as a second end moment of the semi-persistent measurement gap;
transmitting a second configuration parameter of the semi-persistent measurement gap to the UE;
wherein the second configuration parameter includes: a repetition period of the semi-persistent measurement gap and a configuration parameter of one semi-persistent measurement gap;
the configuration parameter of the one semi-persistent measurement gap includes: any two of the second starting moment, the second end moment and a second duration; and the second duration is a duration from the second starting moment to the second end moment.

Optionally, the method further includes:

transmitting second signaling to the UE, where the second signaling is used to activate the semi-persistent measurement gap; or,
transmitting third signaling to the UE, where the third signaling is used to instruct to activate the semi-persistent downlink PRS and activate the semi-persistent measurement gap.

Optionally, the UE positioning measurement capability information includes at least one of the following:

in the same sub-frame or slot, whether the UE is able to simultaneously perform positioning measurement and downlink processing;
in a downlink activated bandwidth part, whether the UE is able to simultaneously perform positioning measurement and downlink processing;
in different bandwidth parts of the same frequency band, whether the UE is able to simultaneously perform positioning measurement and downlink processing; or,
in different frequency bands, whether the UE is able to simultaneously perform positioning measurement and downlink processing;
wherein the downlink processing includes downlink channel processing or processing of downlink signals other than downlink PRS.

According to a second aspect, one embodiment of the present disclosure provides a network device, including: a transceiver, a memory, a processor, and a program stored in the memory and executable on the processor, wherein the processor executes the program to perform:
configuring for a user equipment (UE), a target measurement gap for an aperiodic downlink PRS or a semi-persistent downlink PRS; wherein the target measurement gap is an aperiodic measurement gap or a semi-persistent measurement gap.

Optionally, the processor executes the program to perform:
determining the target measurement gap according to target information, wherein the target information is UE positioning measurement capability information reported by the UE or historical data information reported by the UE.

Optionally, a time unit of the target measurement gap is associated with the UE positioning measurement capability information reported by the UE;
the time unit of the target measurement gap is sub-frame, slot, or orthogonal frequency division multiplexing (OFDM) symbol.

Optionally, the processor executes the program to perform:

transmitting a configuration parameter of the target measurement gap to the UE;
and/or,
configuring a target duration of the aperiodic downlink PRS or semi-persistent downlink PRS for the UE; wherein the target duration is a sub-frame, slot or OFDM symbol where the aperiodic downlink PRS or semi-persistent downlink PRS is located, and the target measurement gap is configured by configuring the target duration.

Optionally, the processor executes the program to perform:
transmitting the configuration parameter of the target measurement gap to the UE through first signaling; wherein the first signaling is LTE positioning protocol (LPP) signaling, radio resource control (RRC) signaling, medium access control control element (MAC-CE) signaling or downlink control information (DCI) signaling.
Optionally, in case that the target measurement gap is the aperiodic measurement gap for the aperiodic downlink PRS, the processor executes the program to perform:

determining a minimum value of starting moments of aperiodic downlink positioning reference signal PRS resource sets from all downlink cells, as a first starting moment of the aperiodic measurement gap;
determining a maximum value of end moments of the aperiodic downlink PRS resource sets from all downlink cells, as a first end moment of the aperiodic measurement gap;
transmitting a first configuration parameter of the aperiodic measurement gap to the UE;
wherein the first configuration parameter includes: any two of the first starting moment, the first end moment and a first duration; and the first duration is a duration from the first starting moment to the first end moment.

Optionally, in case that the target measurement gap is the semi-persistent measurement gap for the semi-persistent downlink PRS, the processor executes the program to perform:

in one semi-persistent downlink PRS period, determining a minimum value of starting moments of semi-persistent downlink PRS resource sets from all downlink cells, as a second starting moment of the semi-persistent measurement gap;
in the semi-persistent downlink PRS period, determining a maximum value of end moments of semi-persistent downlink PRS resource sets from all downlink cells, as a second end moment of the semi-persistent measurement gap;
transmitting a second configuration parameter of the semi-persistent measurement gap to the UE;
wherein the second configuration parameter includes: a repetition period of the semi-persistent measurement gap and a configuration parameter of one semi-persistent measurement gap;
the configuration parameter of the one semi-persistent measurement gap includes: any two of the second starting moment, the second end moment and a second duration; and the second duration is a duration from the second starting moment to the second end moment.

Optionally, the processor executes the program to perform:

transmitting second signaling to the UE, where the second signaling is used to activate the semi-persistent measurement gap; or,
transmitting third signaling to the UE, where the third signaling is used to instruct to activate the semi-persistent downlink PRS and activate the semi-persistent measurement gap.

Optionally, the UE positioning measurement capability information includes at least one of the following:

in the same sub-frame or slot, whether the UE is able to simultaneously perform positioning measurement and downlink processing;
in a downlink activated bandwidth part, whether the UE is able to simultaneously perform positioning measurement and downlink processing;
in different bandwidth parts of the same frequency band, whether the UE is able to simultaneously perform positioning measurement and downlink processing; or,
in different frequency bands, whether the UE is able to simultaneously perform positioning measurement and downlink processing;
wherein the downlink processing includes downlink channel processing or processing of downlink signals other than downlink PRS.

According to a third aspect, one embodiment of the present disclosure provides a network device, including:

a configuration module configured to configure for a user equipment (UE), a target measurement gap for an aperiodic downlink PRS or a semi-persistent downlink PRS; wherein the target measurement gap is an aperiodic measurement gap or a semi-persistent measurement gap.

According to a fourth aspect, one embodiment of the present disclosure provides a readable storage medium, including: a program stored thereon, wherein the program is executed by a processor to implements steps of the above measurement configuration method.

According to a fifth aspect, one embodiment of the present disclosure provides a measurement method, performed by a user equipment (UE), including:

obtaining a target measurement gap for an aperiodic downlink PRS or a semi-persistent downlink PRS, which is configured by a network device for the UE; wherein the target measurement gap is an aperiodic measurement gap or a semi-persistent measurement gap; and
performing downlink PRS reception and measurement according to the target measurement gap.

Optionally, obtaining the target measurement gap for the aperiodic downlink PRS or the semi-persistent downlink PRS, which is configured by the network device for the UE, includes:

receiving a configuration parameter of the target measurement gap transmitted by the network device;
and/or,
obtaining a target duration of the aperiodic downlink PRS or semi-persistent downlink PRS configured by the network device for the UE; wherein the target duration is a sub-frame, slot or OFDM symbol where the aperiodic downlink PRS or semi-persistent downlink PRS is located, and the target measurement gap is configured by configuring the target duration.

Optionally, receiving the configuration parameter of the target measurement gap transmitted by the network device, includes:
receiving the configuration parameter of the target measurement gap transmitted by the network device through first signaling; where the first signaling is LTE positioning protocol (LPP) signaling, radio resource control (RRC) signaling, medium access control control element (MAC-CE) signaling or downlink control information (DCI) signaling.

Optionally, receiving the configuration parameter of the target measurement gap transmitted by the network device, includes:

receiving a first configuration parameter of the aperiodic measurement gap for the aperiodic downlink PRS transmitted by the network device;
wherein the first configuration parameter includes any two of a first starting moment of the aperiodic measurement gap, a first end moment of the aperiodic measurement gap and a first duration; and the first duration is a duration from the first starting moment to the first end moment.

Optionally, receiving the configuration parameter of the target measurement gap transmitted by the network device, includes:

receiving a second configuration parameter of the semi-persistent measurement gap for the semi-persistent downlink PRS transmitted by the network device;
wherein the second configuration parameter includes: a repetition period of the semi-persistent measurement gap and a configuration parameter of one semi-persistent measurement gap;
the configuration parameter of the one semi-persistent measurement gap includes any two of the second starting moment of the semi-persistent measurement gap, the second end moment of the semi-persistent measurement gap and a second duration; and the second duration is a duration from the second starting moment to the second end moment.

Optionally, the method further includes:

receiving second signaling transmitted by the network device; where the second signaling is used to activate the semi-persistent measurement gap; or,
receive third signaling transmitted by the network device, where the third signaling is used to activate the semi-persistent downlink PRS and activate the semi-persistent measurement gap.

Optionally, in case of obtaining a target duration of the aperiodic downlink PRS or semi-persistent downlink PRS configured by the network device for the UE, the performing downlink PRS reception and measurement according to the target measurement gap includes:

according to UE positioning measurement capability information, determining to receive and measure the downlink PRS within the target duration, and not receive and process a downlink channel or a first downlink signal; or, according to the UE positioning measurement capability information, determining to perform downlink PRS reception and measurement within the target duration, and receive and process the downlink channel or the first downlink signal; where the first downlink signal is a downlink signal other than the downlink PRS.

Optionally, the method may further include: transmitting UE positioning measurement capability information to the network device.
in case of obtaining the target duration of the aperiodic downlink PRS or semi-persistent downlink PRS configured by the network device for the UE, performing downlink PRS reception and measurement according to the target measurement gap, includes:

determining the target measurement gap according to the UE positioning measurement capability information;
within the target measurement gap, performing downlink PRS reception and measurement.

Optionally, in case that the positioning measurement capability information includes: in the same sub-frame or slot, whether UE is able to simultaneously perform positioning measurement and downlink processing, determining the target measurement gap according to the UE positioning measurement capability information, includes:

in the same sub-frame or slot, in case that the UE is unable to simultaneously perform positioning measurement and downlink processing, determining the target measurement gap according to association between the UE positioning measurement capability information and configuration parameters of the measurement gap;
in the same sub-frame or slot, in case that the UE is able to simultaneously perform positioning measurement and downlink processing, determining the target measurement gap according to association between the UE positioning measurement capability information and configuration parameters of the measurement gap as well as a valid condition;
wherein the downlink processing includes downlink channel processing or processing of downlink signals other than downlink PRS.

Optionally, the valid condition includes:

in frequency division duplex mode, determining a first effective slot of a sub-frame where the aperiodic downlink PRS or semi-persistent downlink PRS is located, as the target measurement gap; wherein the first effective slot is a slot in which N1 OFDM symbols are reserved between the aperiodic downlink PRS or semi-persistent downlink PRS and a downlink channel or a first downlink signal in the same slot;
in time division duplex mode, determining a second effective slot of a slot where the aperiodic downlink PRS or semi-persistent downlink PRS is located, as the target measurement gap; wherein the second effective slot is a downlink slot in which N1 OFDM symbols are reserved between the aperiodic downlink PRS or semi-persistent downlink PRS and the downlink channel or the first downlink signal, or, the second effective slot is a flexible slot in which at least N2 OFDM symbols are reserved between uplink OFDM symbols before start of each downlink PRS resource and at least N2 OFDM symbols are reserved between uplink OFDM symbols after end of each downlink PRS resource;
wherein N1 and N2 are positive integers greater than or equal to 1.

Optionally, in case that the UE positioning measurement capability information includes: whether the UE is able to simultaneously perform positioning measurement and downlink processing in a downlink active bandwidth part, in different bandwidth parts of the same frequency band or in different frequency bands, performing downlink PRS reception and measurement according to the target measurement gap, includes:

performing the downlink PRS reception and measurement in the downlink active bandwidth part, in different bandwidth parts of the same frequency band or in different frequency bands, according to the UE positioning measurement capability information;
wherein the downlink processing includes downlink channel processing or processing of downlink signals other than downlink PRS.

According to a sixth aspect, one embodiment of the present disclosure provides a user equipment (UE), including: a transceiver, a memory, a processor, and a program stored in the memory and executable on the processor, wherein the processor executes the program to perform:

obtaining a target measurement gap for an aperiodic downlink PRS or a semi-persistent downlink PRS, which is configured by a network device for the UE; wherein the target measurement gap is an aperiodic measurement gap or a semi-persistent measurement gap; and
performing downlink PRS reception and measurement according to the target measurement gap.

Optionally, the processor executes the program to perform:

receiving a configuration parameter of the target measurement gap transmitted by the network device;
and/or,
obtaining a target duration of the aperiodic downlink PRS or semi-persistent downlink PRS configured by the network device for the UE; wherein the target duration is a sub-frame, slot or OFDM symbol where the aperiodic downlink PRS or semi-persistent downlink PRS is located, and the target measurement gap is configured by configuring the target duration.

Optionally, the processor executes the program to perform:
receiving the configuration parameter of the target measurement gap transmitted by the network device through first signaling; where the first signaling is LTE positioning protocol (LPP) signaling, radio resource control (RRC) signaling, medium access control control element (MAC-CE) signaling or downlink control information (DCI) signaling.
Optionally, the processor executes the program to perform:

receiving a first configuration parameter of the aperiodic measurement gap for the aperiodic downlink PRS transmitted by the network device;
wherein the first configuration parameter includes any two of a first starting moment of the aperiodic measurement gap, a first end moment of the aperiodic measurement gap and a first duration; and the first duration is a duration from the first starting moment to the first end moment.

Optionally, the processor executes the program to perform:

receiving a second configuration parameter of the semi-persistent measurement gap for the semi-persistent downlink PRS transmitted by the network device;
wherein the second configuration parameter includes: a repetition period of the semi-persistent measurement gap and a configuration parameter of one semi-persistent measurement gap;
the configuration parameter of the one semi-persistent measurement gap includes any two of the second starting moment of the semi-persistent measurement gap, the second end moment of the semi-persistent measurement gap and a second duration; and the second duration is a duration from the second starting moment to the second end moment.

Optionally, the processor executes the program to perform:

receiving second signaling transmitted by the network device; where the second signaling is used to activate the semi-persistent measurement gap; or,
receive third signaling transmitted by the network device, where the third signaling is used to activate the semi-persistent downlink PRS and activate the semi-persistent measurement gap.

Optionally, in case of obtaining a target duration of the aperiodic downlink PRS or semi-persistent downlink PRS configured by the network device for the UE, the processor executes the program to perform:

according to UE positioning measurement capability information, determining to receive and measure the downlink PRS within the target duration, and not receive and process a downlink channel or a first downlink signal; or,
according to the UE positioning measurement capability information, determining to perform downlink PRS reception and measurement within the target duration, and receive and process the downlink channel or the first downlink signal; where the first downlink signal is a downlink signal other than the downlink PRS.

Optionally, the processor executes the program to perform: transmitting UE positioning measurement capability information to the network device.

in case of obtaining the target duration of the aperiodic downlink PRS or semi-persistent downlink PRS configured by the network device for the UE, the processor executes the program to perform:

determining the target measurement gap according to the UE positioning measurement capability information;
within the target measurement gap, performing downlink PRS reception and measurement.

Optionally, in case that the positioning measurement capability information includes: in the same sub-frame or slot, whether UE is able to simultaneously perform positioning measurement and downlink processing, the processor executes the program to perform:

in the same sub-frame or slot, in case that the UE is unable to simultaneously perform positioning measurement and downlink processing, determining the target measurement gap according to association between the UE positioning measurement capability information and configuration parameters of the measurement gap;
in the same sub-frame or slot, in case that the UE is able to simultaneously perform positioning measurement and downlink processing, determining the target measurement gap according to association between the UE positioning measurement capability information and configuration parameters of the measurement gap as well as a valid condition;
wherein the downlink processing includes downlink channel processing or processing of downlink signals other than downlink PRS.

Optionally, the valid condition includes:

in frequency division duplex mode, determining a first effective slot of a sub-frame where the aperiodic downlink PRS or semi-persistent downlink PRS is located, as the target measurement gap; wherein the first effective slot is a slot in which N1 OFDM symbols are reserved between the aperiodic downlink PRS or semi-persistent downlink PRS and a downlink channel or a first downlink signal in the same slot;
in time division duplex mode, determining a second effective slot of a slot where the aperiodic downlink PRS or semi-persistent downlink PRS is located, as the target measurement gap; wherein the second effective slot is a downlink slot in which N1 OFDM symbols are reserved between the aperiodic downlink PRS or semi-persistent downlink PRS and the downlink channel or the first downlink signal, or, the second effective slot is a flexible slot in which at least N2 OFDM symbols are reserved between uplink OFDM symbols before start of each downlink PRS resource and at least N2 OFDM symbols are reserved between uplink OFDM symbols after end of each downlink PRS resource;
wherein N1 and N2 are positive integers greater than or equal to 1.

Optionally, in case that the UE positioning measurement capability information includes: whether the UE is able to simultaneously perform positioning measurement and downlink processing in a downlink active bandwidth part, in different bandwidth parts of the same frequency band or in different frequency bands, the processor executes the program to perform:

performing the downlink PRS reception and measurement in the downlink active bandwidth part, in different bandwidth parts of the same frequency band or in different frequency bands, according to the UE positioning measurement capability information;
wherein the downlink processing includes downlink channel processing or processing of downlink signals other than downlink PRS.

According to a seventh aspect, one embodiment of the present disclosure provides a user equipment (UE), including:

an obtaining module configured to obtain a target measurement gap for an aperiodic downlink PRS or a semi-persistent downlink PRS, which is configured by a network device for the UE; wherein the target measurement gap is an aperiodic measurement gap or a semi-persistent measurement gap; and
a processing module configured to perform downlink PRS reception and measurement according to the target measurement gap.

According to an eighth aspect, one embodiment of the present disclosure provides a readable storage medium, including: a program stored thereon, wherein the program is executed by a processor to implements steps of the above measurement method.
The beneficial effects of the above technical scheme of the present disclosure are as following. The target measurement gap for the aperiodic downlink PRS or the semi-persistent downlink PRS is configured for the UE by a network device, which can solve the problem that there is no solution for processing an aperiodic downlink PRS or a semi-persistent downlink PRS within a measurement gap; and which can further avoid the problem that for processing an aperiodic downlink PRS or semi-persistent downlink PRS within a periodic measurement gap, the UE cannot process the downlink PRS, or the problem of not being able to meet requirements of low positioning delay, that is, the positioning delay can be reduced.

## BRIEF DESCRIPTION OF THE DRAWINGS

FIG. 1 is a flowchart of a measurement configuration method according to an embodiment of the present disclosure;
FIG. 2 is a schematic diagram showing configuration parameters of an aperiodic measurement gap according to an embodiment of the present disclosure;
FIG. 3 is a schematic diagram showing configuration parameters of a semi-persistent measurement gap according to an embodiment of the present disclosure;
FIG. 4 is a first block diagram of a network device according to an embodiment of the present disclosure;
FIG. 5 is a second block diagram of a network device according to an embodiment of the present disclosure;
FIG. 6 is a flowchart of a measurement method according to an embodiment of the present disclosure;
FIG. 7 is a first block diagram of a terminal according to an embodiment of the present disclosure; and
FIG. 8 is a second block diagram of a terminal according to an embodiment of the present disclosure.

## DETAILED DESCRIPTION

In order to make the technical problems to be solved, the technical solutions and the advantages of the present disclosure more apparent, the present disclosure will be described hereinafter in conjunction with the drawings and embodiments. In the following descriptions, to facilitate understanding embodiments of the present disclosure, specific configurations and specific details of components are provided. In addition, for clarity and simplicity, descriptions about known functions and constructions are omitted.

It should be understood that, the phrase "one embodiment" or "an embodiment" as used throughout the specification means that a particular feature, structure, or characteristic relating to an embodiment is included in at least one embodiment of the present disclosure. Thus, "in one embodiment" or "in an embodiment" as used throughout the specification does not necessarily refer to the same embodiment. In addition, these specific features, structures, or characteristics may be combined in any suitable manner in one or more embodiments.

In various embodiments of the present disclosure, it should be understood that, the sequence numbers of the following processes do not imply the order of execution. The order of execution of each process should be determined by its function and internal logic, which should not constitute any limitation to the implementation processes of the embodiments of the application.

In addition, the terms "system" and "network" are often used interchangeably herein.

In the embodiments of the present disclosure, it should be understood that "B corresponding to A" means that B is associated with A, and B may be determined based on A. However, it should also be understood that determining B based on A does not mean that B is only determined based on A, and B may also be determined based on A and/or other information.

In the embodiments of the present disclosure, forms of access network are not limited, and may include access network of a macro base station, a pico base station, a node B (the name of the 3G mobile base station), an enhanced node B (eNB), a gNB (the name of the 5G mobile base station), a femto eNB or a home eNode B or a Home eNB or an HeNB, a relay station, an access point (AP), a remote radio unit (RRU), a remote radio head (RRH). A user equipment may be a mobile phone (or cellphone), or another device which is capable of transmitting and receiving a wireless signal, including a UE, a personal digital assistant (PDA), a wireless modem, a wireless communication device, a handheld device, a laptop, a cordless phone, a wireless local loop (WLL) station, a customer premise equipment which is capable of converting a mobile signal into a WiFi signal, or a mobile smart hotspot, a smart appliance, or another device which may spontaneously communicate with a mobile communication network without a human operation, and so on.

Optionally, in embodiments of the present disclosure, a PRS may represent each reference signal that can be used to measure time of arrival (TOA). For example, the PRS may include PRS for traditional downlink time difference of arrival (DL-TDOA) positioning, channel state information reference signal (CSI-RS), etc.

Meanings of technical terms in the application are explained in the following.

A downlink PRS resource is defined as a resource element (RE) set used for downlink PRS transmission. In time domain, the RE set may include one or more consecutive symbols in one slot.

A downlink PRS resource set is a set of downlink PRS resources of a same TRP. Each downlink PRS resource in the downlink PRS resource set is associated with a single spatial transmit filter (i.e., transmit beam) transmitted by a single TRP. One TRP may be configured with one or two downlink PRS resource sets. Whether UE supports configuration of two downlink PRS resource sets depends on UE capability.

A downlink PRS positioning frequency layer is a collection of downlink PRS resource sets with the same SCS, CP type, Point A, PRS bandwidth and starting PRB position across one or multiple TRPs.

Optionally, for a periodic downlink PRS, a value range of a downlink PRS resource period is: {4, 8, 16, 32, 64, 5, 10, 20, 40, 80, 160, 320, 640, 1280, 2560, 5120, 10240}$2^{\mu}$ slots, where $\mu$={0, 1, 2, 3}, which are corresponding to PRS subcarrier spacings of {15, 30, 60, 120} kHz, respectively.

NR PRS configuration and bandwidth part (BWP) configuration are independent of each other, that is, the NR PRS configuration is not constrained by bandwidth in the BWP configuration. All downlink PRS resource sets in the same downlink PRS positioning frequency layer have the same downlink PRS bandwidth and initial PRB value. A granularity of the downlink PRS starting PRB parameter is 1, and the downlink PRS starting PRB parameter has a minimum value of 0 and a maximum value of 2176. The downlink PRS bandwidth is configured with a granularity of 4PRB, and a maximum value of the downlink PRS bandwidth depends on UE's capability for processing the downlink PRS bandwidth reported by the UE to the network, and the downlink PRS bandwidth is not less than 24 PRBs.

In case that the UE is not configured with a measurement gap, the UE does not expect to perform processing of PRS reception and measurement. In case that the UE is configured with a measurement gap, within the configured measurement gap, the UE may measure PRS resources in an activated downlink BWP with the same or different subcarrier spacings as the activated downlink BWP, or measure downlink PRS resources outside the activated downlink BWP (including intra-frequency or inter-frequency). According to needs, the UE applies for the measurement gap through RRC signaling. During the measurement gap, the UE does not process other downlink physical channels and signals.

For periodic downlink PRS, two types of measurement gaps are defined: UE-based (per-UE) measurement gap and frequency range (FR)-based (per-FR) measurement gap; measurement gap length (MGL) and measurement gap repetition period (MGRP) in 24 measurement gap patterns are provided as shown in the following Table 1. All measurement gaps are configured periodically.

Table 1

| Pattern Id of measurement gap patterns | measurement gap length/ms | measurement gap repetition period/ms |
|---|---|---|
| 0 | 6 | 40 |
| 1 | 6 | 80 |
| 2 | 3 | 40 |
| 3 | 3 | 80 |
| 4 | 6 | 20 |
| 5 | 6 | 160 |
| 6 | 4 | 20 |
| 7 | 4 | 40 |
| 8 | 4 | 80 |
| 9 | 4 | 160 |
| 10 | 3 | 20 |
| 11 | 3 | 160 |
| 12 | 5.5 | 20 |
| 13 | 5.5 | 40 |
| 14 | 5.5 | 80 |
| 15 | 5.5 | 160 |
| 16 | 3.5 | 20 |
| 17 | 3.5 | 40 |
| 18 | 3.5 | 80 |
| 19 | 3.5 | 160 |

(continued)

| Pattern Id of measurement gap patterns | measurement gap length/ms | measurement gap repetition period/ms |
|---|---|---|
| 20 | 1.5 | 20 |
| 21 | 1.5 | 40 |
| 22 | 1.5 | 80 |
| 23 | 1.5 | 160 |

Specifically, one embodiment of the present disclosure provides a measurement configuration method, which solves the problem that there is no solution for processing an aperiodic downlink PRS or a semi-persistent downlink PRS within a measurement gap.

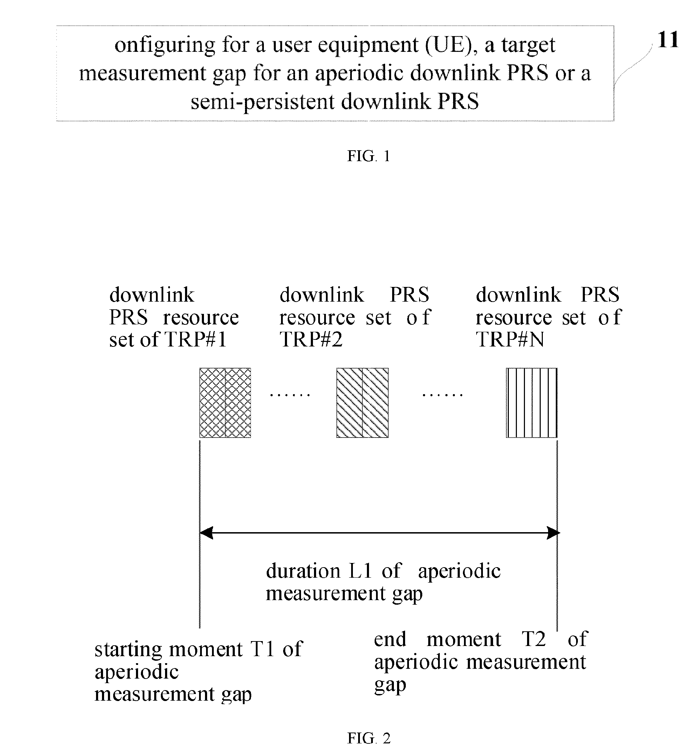

As shown in FIG. 1, one embodiment of the present disclosure provides a measurement configuration method, which specifically includes the following steps.

Step 11: configuring for a user equipment (UE), a target measurement gap for an aperiodic downlink PRS or a semi-persistent downlink PRS.

The target measurement gap is an aperiodic measurement gap or a semi-persistent measurement gap.

Optionally, the target measurement gap for the aperiodic downlink PRS is an aperiodic measurement gap, and the target measurement gap for the semi-persistent measurement gap is a semi-persistent measurement gap.

Optionally, the measurement gap for the aperiodic downlink PRS or the semi-persistent downlink PRS may be a measurement gap dedicated to positioning, that is, the measurement gap for the aperiodic downlink PRS or the semi-persistent downlink PRS occupies a different time resource from a current measurement gap used for other purposes; or, the measurement gap for the aperiodic downlink PRS or the semi-persistent downlink PRS and the current measurement gap used for other purposes may also multiplex the same time resource.

In the embodiment of the present disclosure, the target measurement gap for the aperiodic downlink PRS or the semi-persistent downlink PRS is configured for the UE by a network device, which can solve the problem that there is no solution for processing an aperiodic downlink PRS or a semi-persistent downlink PRS within a measurement gap; and which can further avoid the problem that for processing an aperiodic downlink PRS or semi-persistent downlink PRS within a periodic measurement gap, the UE cannot process the downlink PRS, or the problem of not being able to meet requirements of low positioning delay, that is, the positioning delay can be reduced.

Optionally, the network device may configure the target measurement gap for the UE according to target message information, where the target message information is UE positioning measurement capability information reported by the UE or historical data information reported by the UE. That is, the network device can select/autonomously select to configure the target measurement gap for the aperiodic downlink PRS or the semi-persistent downlink PRS.

For example, the network device may select to configure the target measurement gap for the aperiodic downlink PRS or semi-persistent downlink PRS in an explicit and/or implicit manner. For instance, according to the UE positioning measurement capability information reported by the UE, the network device selects to configure the target measurement gap for the aperiodic downlink PRS or semi-persistent downlink PRS in an explicit and/or implicit manner.

Optionally, a time unit of the target measurement gap is associated with the UE positioning measurement capability information reported by the UE. The time unit of the target measurement gap is sub-frame, slot, or orthogonal frequency division multiplexing (OFDM) symbol. For example, according to association between UE positioning measurement capability levels and time units of the target measurement gap, a time unit of the target measurement gap corresponding to the UE positioning measurement capability level reported by the UE is determined.

Optionally, the UE positioning measurement capability information includes at least one of the following:

in the same sub-frame or slot, whether UE is able to simultaneously perform positioning measurement and downlink processing;
in a downlink activated bandwidth part, whether UE is able to simultaneously perform positioning measurement and downlink processing;
in different bandwidth parts of the same frequency band, whether UE is able to simultaneously perform positioning measurement and downlink processing; or,
in different frequency bands, whether UE is able to simultaneously perform positioning measurement and downlink processing;
where the downlink processing includes downlink channel processing or processing of downlink signals other than downlink PRS.

Optionally, the association between UE positioning measurement capability levels and time units of the target measurement gap, may refer to association between UE positioning measurement capability information and configuration parameters in the embodiment in which the target measurement gap is implicitly configured.

For another example, the network device can independently select to configure the target measurement gap for the aperiodic downlink PRS or semi-persistent downlink PRS in an explicit and/or implicit manner. For instance, according to the historical data information reported by the UE, the network device independently selects to configure the target measurement gap for the aperiodic downlink PRS or semi-persistent downlink PRS in an explicit and/or implicit manner.

Optionally, the step 11 may specifically include: transmitting a configuration parameter of the target measurement gap to the UE; and/or configuring a target duration of the aperiodic downlink PRS or semi-persistent downlink PRS for the UE; where the target duration is a sub-frame, slot or OFDM symbol where the aperiodic downlink PRS or semi-persistent downlink PRS is located. The target measurement gap is configured by configuring the target duration.

For example, the network device may explicitly configure the target measurement gap for the aperiodic downlink PRS or semi-persistent downlink PRS, and transmit the configuration parameter of the target measurement gap to the UE, to notify the UE of the target measurement gap for the aperiodic downlink PRS or semi-persistent downlink PRS.

Optionally, the step of transmitting a configuration parameter of the target measurement gap to the UE, may specifically include: transmitting the configuration parameter of the target measurement gap to the UE through first signaling.

The first signaling may be: LTE positioning protocol (LPP) signaling, radio resource control (RRC) signaling, medium access control control element (MAC-CE) signaling or downlink control information (DCI) signaling.

Optionally, in case that the target measurement gap is an aperiodic measurement gap for an aperiodic downlink PRS, the transmitting a configuration parameter of the target measurement gap to the UE, includes:

determining a minimum value of starting moments of aperiodic downlink positioning reference signal PRS resource sets from all downlink cells, as a first starting moment of the aperiodic measurement gap;

determining a maximum value of end moments of the aperiodic downlink PRS resource sets from all downlink cells, as a first end moment of the aperiodic measurement gap;

transmitting a first configuration parameter of the aperiodic measurement gap to the UE;

where the first configuration parameter includes: any two of the first starting moment, the first end moment and a first duration; and the first duration is a duration from the first starting moment to the first end moment; for example, the first duration L1=T2-T1, where T2 represents the first end moment, and T1 represents the first starting moment.

For example, the network device configures a total of N transmit and receive points (TRPs), and each TRP may include at least one downlink PRS resource set; T1 represents the starting moment of the aperiodic measurement gap, and T2 represents the end moment of the aperiodic measurement gap; L1 represents a duration of the aperiodic measurement gap.

The network device may notify any two values of T1, T2 and L1 through explicit signaling. Optionally, the explicit signaling may be LPP signaling, RRC signaling, MAC-CE signaling or DCI signaling.

$$T1=\min\{T1(TRP\#1),\ T1(TRP\#2),...,T1(TRP\#N)\};$$

that is, T1 is a minimum value of starting moments of aperiodic downlink PRS resource sets from all downlink cells.

$$T2=\max\{T2(TRP\#1),\ T2(TRP\#2),\ ...,\ T2(TRP\#N)\};$$

that is, T2 is a maximum value of end moments of the aperiodic downlink PRS resource sets from all downlink cells.

$$L=T2-T1.$$

Time units of T1, T2 and L may be sub-frames, slots or OFDM symbols. The advantage of taking sub-frames as the time units of T1, T2 and L lies in absolute time, and consistency can be guaranteed as a unit of the PRS period is a sub-frame. The advantage of taking slots as the time units of T1, T2 and L lies in that time domain mapping of PRS resources and PRS resource sets is carried out with the slot as a basic unit. The advantage of taking OFDM symbols as the time units of T1, T2 and L lies in that a granularity is small and an occupied time-frequency resource overhead is small.

As shown in FIG. 2, by taking the slot as the unit, a total of N TRPs are configured; each TRP includes 1 downlink PRS resource set; each downlink PRS resource set includes 4 downlink PRS resources; and each downlink PRS resource includes 6 OFDM symbols. The downlink PRS resource sets of all TRPs adopt consecutive slot allocation, i.e., in a time division multiplexing (TDM) manner. Therefore, each downlink PRS resource set occupies 2 consecutive slots. The N TRPs occupy a total of 2N consecutive downlink slots, that is, L1=2N.

Optionally, in case that the target measurement gap is a semi-persistent measurement gap for a semi-persistent downlink PRS, the step of transmitting a configuration parameter of the target measurement gap to the UE, may include:

in one semi-persistent downlink PRS period, determining a minimum value of starting moments of semi-persistent downlink PRS resource sets from all downlink cells, as a second starting moment of the semi-persistent measurement gap;

in the semi-persistent downlink PRS period, determining a maximum value of end moments of semi-persistent downlink PRS resource sets from all downlink cells, as a second end moment of the semi-persistent measurement gap;

transmitting a second configuration parameter of the semi-persistent measurement gap to the UE;

where the second configuration parameter includes: a repetition period of the semi-persistent measurement gap and a configuration parameter of one semi-persistent measurement gap; the configuration parameter of the one semi-persistent measurement gap includes: any two of the second starting moment, the second end moment and a second duration; and the second duration is a duration from the second starting moment to the second end moment; for example, the second duration $L2=T2-T1$, where $T2$ represents the second end moment, and $T1$ represents the second starting moment.

The repetition period of the semi-persistent measurement gap for the semi-persistent downlink PRS is equal to or greater than a repetition period of the semi-persistent downlink PRS.

Optionally, in case that the target measurement gap is a semi-persistent measurement gap for a semi-persistent downlink PRS, the method further includes:

transmitting second signaling to the UE, where the second signaling is used to activate the semi-persistent measurement gap; or, transmitting third signaling to the UE, where the third signaling is used to instruct to activate the semi-persistent downlink PRS and activate the semi-persistent measurement gap.

Optionally, for the semi-persistent measurement gap, when the semi-persistent downlink PRS is deactivated, it is automatically disabled.

For example, a total of N TRPs are configured, and TDM multiplexing mode is adopted between downlink PRS resource sets of different TRPs. T1 represents a starting moment of the semi-persistent measurement gap; T2 represents an end moment of the semi-persistent measurement gap; L2 represents a duration of the semi-persistent measurement gap in a cycle; and P represents a repetition period of the semi-persistent measurement gap.

The network device may notify P and any two values of T1, T2 and L2 through explicit signaling. Optionally, the explicit signaling may be LPP signaling, RRC signaling, MAC-CE signaling or DCI signaling.

$$T1=\min\{T1(TRP\#1),\ T1(TRP\#2),\ ...,\ T1(TRP\#N)\};$$

that is, T1 is a minimum value of starting moments of semi-persistent downlink PRS resource sets from all downlink cells, within a semi-persistent downlink PRS period.

$$T2=\max\{T2(TRP\#1),\ T2(TRP\#2),\ ...,\ T2(TRP\#N)\};$$

that is, T2 is a maximum value of end moments of the semi-persistent downlink PRS resource sets from all downlink cells, within the semi-persistent downlink PRS period.

$$L2=T2-T1;\ T3=T1+P;\ T4=T2+P.$$

Where T3 represents a starting moment of a semi-persistent measurement gap for a next repetition period, and T4 represents an end moment of the semi-persistent measurement gap for the next repetition period. Time units of T1, T2, T3, T4, L2 and P may be sub-frames, slots or OFDM symbols (which may be specifically determined according to UE positioning measurement capability information).

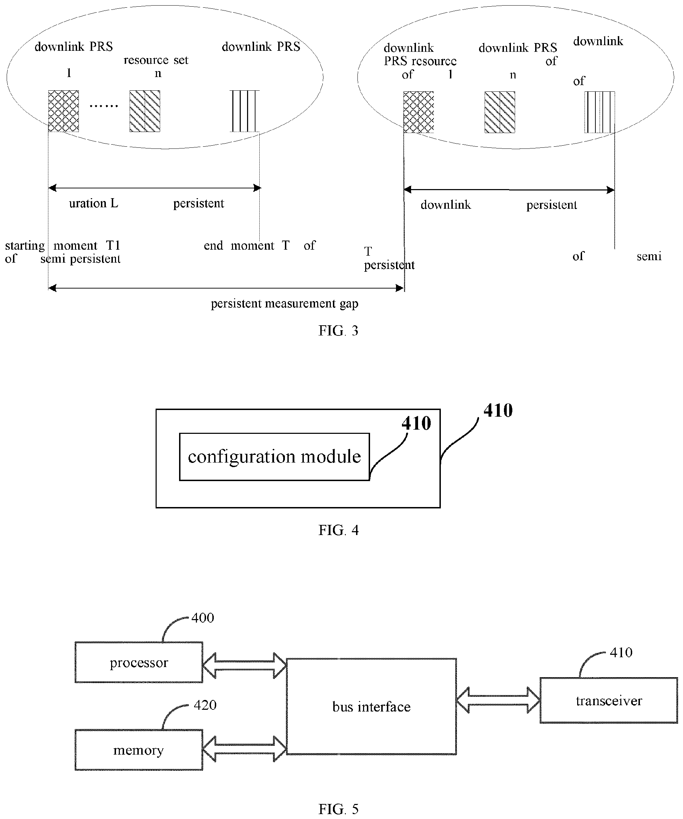

As shown in FIG. 3, by taking the slot as the unit, a total of N TRPs are configured; each TRP includes 1 downlink PRS resource set; each downlink PRS resource set includes 4 downlink PRS resources; and each downlink PRS resource includes 6 OFDM symbols. The downlink PRS resource sets of all TRPs adopt consecutive slot allocation, i.e., in a time division multiplexing (TDM) manner. Therefore, each downlink PRS resource set occupies 2 consecutive slots. The N TRPs occupy a total of 2N consecutive downlink slots, that is, L=2N. The semi-persistent downlink PRS is repeated twice, P=8N.

For another example, the network device may configure, in an implicit configuration manner, the target measurement gap for the aperiodic downlink PRS or semi-persistent downlink PRS. That is, the network device does not configure a positioning measurement gap for the UE through explicit signaling, but configures a time domain resource (or referred as a target duration, such as a sub-frame, a slot or an OFDM symbol where the aperiodic downlink PRS or semi-persistent downlink PRS is located) where the aperiodic downlink PRS or semi-persistent downlink PRS is located, the UE performs downlink positioning signal reception and measurement processing by default in a predefined manner in the protocol.

Optionally, according to the UE positioning measurement capability information reported by the UE to the network device, within a positioning measurement gap determined by implicit configuration, the UE may select one of the following two modes for processing:

Mode 1: the UE can only perform positioning measurement operations, and cannot receive and process a downlink channel and a first downlink signal;

Mode 2: the UE can not only perform positioning measurement operations, but also receive and process the downlink physical channel and the first downlink signal.

The first downlink signal is a downlink signal other than the downlink PRS.

Optionally, the foregoing modes 1 and 2 may be pre-defined by a protocol or notified by high-level signaling.

Association between UE positioning measurement capability levels, UE positioning measurement capability, starting moment T1, duration L and end moment T2, is shown in the following Table 2, where N represents the number of configured TRPs.

Table 2

| UE positioning measurement capability levels | UE positioning measurement capability | starting moment T1 of target measurement gap | duration L of target measurement gap | end moment T2 of target measurement gap |
|---|---|---|---|---|
| Level 1 | NO | T1=min{T1(TRP#1), T1(TRP#2), ..., T1(TRP#N)}; where a time unit of T1 is sub-frame. | L=T2-T1; where a time unit of L is sub-frame. | T2=max{T2(TRP#1), T2(TRP#2),..., T2(TRP#N)}; where a time unit of T2 is sub-frame. |
| Level 2 | NO | T1=min{T1(TRP#1), T1(TRP#2), ..., T1(TRP#N)}; where a time unit of T1 is slot. | L=T2-T1; where a time unit of L is slot. | T2=max{T2(TRP#1), T2(TRP#2),..., T2(TRP#N)}; where a time unit of T2 is slot. |
| Level 3 | NO | T1=min{T1(TRP#1), T1(TRP#2), ..., T1(TRP#N)}; where a time unit of T1 is OFDM symbol. | L=T2-T1; where a time unit of L is OFDM symbol. | T2=max{T2(TRP#1), T2(TRP#2),..., T2(TRP#N)}; where a time unit of T2 is OFDM symbol. |
| Level 4 | YES (sub-frame level) | T1=min{T1(TRP#1), T1(TRP#2), ..., T1(TRP#N)}; where a time unit of L is slot. | L=T2-T1; where a time unit of L is slot. | T2=max{T2(TRP#1), T2(TRP#2), ..., T2(TRP#N)}; where a time unit of T2 is slot. |
| Level 5 | YES (slot level) | T1=min{T1(TRP#1), T1(TRP#2), ..., T1(TRP#N)}; where a time unit of L is OFDM symbol. | L=T2-T1; where a time unit of L is OFDM symbol. | T2= max{T2(TRP#1), T2(TRP#2), ..., T2(TRP#N)}; where a time unit of T2 is OFDM symbol. |

Optionally, valid slots and valid condition judgment rules for the above UE positioning measurement capability levels of level 4 and level 5 are shown in Table 3, where N1 and N2 are positive integers greater than or equal to 1.

Table 3

| CASE index | duplex mode | definition of valid slot | valid condition judgment |
|---|---|---|---|
| CASE1 | FDD | all slots are valid slots | In the same slot, N1 OFDM symbols are reserved relative to other downlink channels/signals. |
| CASE2 | TDD | downlink slot, or X slot (or referred as flexible slot) | 1) for downlink slot, where N1 OFDM symbols are reserved between the downlink slot and other downlink channels/signals; 2) for X slot, at least N2 OFDM symbols are reserved between uplink OFDM symbols before start of each downlink PRS resource; and at least N2 OFDM symbols are reserved between uplink OFDM symbols after end of each downlink PRS resource. |

Optionally, the foregoing Table 2 and Table 3 may be predefined by a protocol or notified by high-level signaling.

Optionally, in case that the UE positioning measurement capability information includes: whether the UE is able to simultaneously perform positioning measurement and downlink processing in a downlink activated bandwidth part, in different bandwidth parts of the same frequency band or in different frequency bands, the UE can perform downlink positioning reference signal PRS reception and measurement in the target measurement gap, according to corresponding relationship between the UE positioning measurement capability levels and bandwidth-specific UE positioning measurement capability shown in Table 4.

Table 4

| UE positioning measurement capability levels | UE positioning measurement capability in a downlink activated bandwidth part, in different bandwidth parts of the same frequency band or in different frequency bands |
|---|---|
| Level A | The UE performs positioning measurement in the downlink active BWP |
| Level B | The UE performs positioning measurement in different bandwidth parts of the same frequency band |
| Level C | The UE performs positioning measurement in different frequency bands |

For another example, the network device may configure for the UE, through an explicit configuration and an implicit configuration, the target measurement gap for the aperiodic downlink PRS or semi-persistent downlink PRS.

When the target measurement gaps determined according to the explicit configuration and the implicit configuration are inconsistent, the target measurement gap determined according to the explicit configuration may be adopted, or, the target measurement gap determined according to the implicit configuration may be adopted, which are determined by the protocol agreement.

Optionally, it can be agreed that the explicit configuration has a higher priority, that is, when the target measurement gaps determined according to the explicit configuration and the implicit configuration are inconsistent, the target measurement gap determined according to the explicit configuration shall prevail.

The measurement configuration method of the present disclosure has been introduced above, and a corresponding network device in one embodiment will be further described hereinafter in conjunction with the accompanying drawings.

Specifically, as shown in FIG. 4, a network device 400 in one embodiment of the present disclosure includes: a configuration module 410 configured to configure for a user equipment (UE), a target measurement gap for an aperiodic downlink PRS or a semi-persistent downlink PRS; where the target measurement gap is an aperiodic measurement gap or a semi-persistent measurement gap.

Optionally, the network device 400 further includes: a determining module configured to determine the target measurement gap according to target message information, where the target message information is UE positioning measurement capability information reported by the UE or historical data information reported by the UE.

Optionally, a time unit of the target measurement gap is associated with the UE positioning measurement capability information reported by the UE.

The time unit of the target measurement gap is sub-frame, slot, or orthogonal frequency division multiplexing (OFDM) symbol.

Optionally, the configuration module 410 includes:

a transmission submodule configured to transmit a configuration parameter of the target measurement gap to the UE; and/or,

a configuration sub-module configured to configure a target duration of the aperiodic downlink PRS or semi-persistent downlink PRS for the UE; where the target duration is a sub-frame, slot or OFDM symbol where the aperiodic downlink PRS or semi-persistent downlink PRS is located. The target measurement gap is configured by configuring the target duration.

Optionally, the transmission submodule includes:

a transmission unit configured to transmit the configuration parameter of the target measurement gap to the UE through first signaling; where the first signaling is LTE positioning protocol (LPP) signaling, radio resource control (RRC) signaling, medium access control control element (MAC-CE) signaling or downlink control information (DCI) signaling.

Optionally, in case that the target measurement gap is an aperiodic measurement gap for an aperiodic downlink PRS, the transmission submodule includes:

a first determining unit configured to determine a minimum value of starting moments of aperiodic downlink positioning reference signal PRS resource sets from all downlink cells, as a first starting moment of the aperiodic measurement gap;

a second determining unit configured to determine a maximum value of end moments of the aperiodic downlink PRS resource sets from all downlink cells, as a first end moment of the aperiodic measurement gap;

a first transmission unit configured to transmit a first configuration parameter of the aperiodic measurement gap to the UE;

where the first configuration parameter includes: any two of the first starting moment, the first end moment and a first duration; and the first duration is a duration from the first starting moment to the first end moment.

Optionally, in case that the target measurement gap is a semi-persistent measurement gap for a semi-persistent downlink PRS, the transmission submodule includes:

a third determining unit configured to, in one semi-persistent downlink PRS period, determine a minimum value of starting moments of semi-persistent downlink PRS resource sets from all downlink cells, as a second starting moment of the semi-persistent measurement gap;

a fourth determining unit configured to, in the semi-persistent downlink PRS period, determine a maximum value of end moments of semi-persistent downlink PRS resource sets from all downlink cells, as a second end moment of the semi-persistent measurement gap;

a second transmission unit configured to transmit a second configuration parameter of the semi-persistent measurement gap to the UE;

where the second configuration parameter includes: a repetition period of the semi-persistent measurement gap and a configuration parameter of one semi-persistent measurement gap.

The configuration parameter of the one semi-persistent measurement gap includes: any two of the second starting moment, the second end moment and a second duration; and the second duration is a duration from the second starting moment to the second end moment.

Optionally, the network device 400 further includes:

a first transmission module configured to transmit second signaling to the UE, where the second signaling is used to activate the semi-persistent measurement gap;

or,

a second transmission module configured to transmit third signaling to the UE, where the third signaling is used to instruct to activate the semi-persistent downlink PRS and activate the semi-persistent measurement gap.

Optionally, the UE positioning measurement capability information includes at least one of the following:

in the same sub-frame or slot, whether UE is able to simultaneously perform positioning measurement and downlink processing;

in a downlink activated bandwidth part, whether UE is able to simultaneously perform positioning measurement and downlink processing;

in different bandwidth parts of the same frequency band, whether UE is able to simultaneously perform positioning measurement and downlink processing; or,

in different frequency bands, whether UE is able to simultaneously perform positioning measurement and downlink processing;

where the downlink processing includes downlink channel processing or processing of downlink signals other than downlink PRS.

The network device embodiments of the present disclosure are corresponding to the foregoing method embodiments, and all implementation means in the foregoing method embodiments are applicable to the network device embodiments, and can also achieve the same technical effects.

According to the network device 400 in the above scheme, the target measurement gap for the aperiodic downlink PRS or the semi-persistent downlink PRS is configured for the UE by the network device, which can solve the problem that there is no solution for processing an aperiodic downlink PRS or a semi-persistent downlink PRS within a measurement gap; and which can further avoid the problem that for processing an aperiodic downlink PRS or semi-persistent downlink PRS within a periodic measurement gap, the UE cannot process the downlink PRS, or the problem of not being able to meet requirements of low positioning delay, that is, the positioning delay can be reduced.

In order to better achieve the above purpose, as shown in FIG. 5, one embodiment of the present disclosure further provides a network device, including: a processor 500, a memory 520 coupled to the processor 500 through a bus interface, and a transceiver 510 coupled to the processor 500 through a bus interface. The memory 520 is configured to store programs and data used by the processor when performing operations. The transceiver 510 is configured to send data information or pilots, and receive uplink control channels. The processor 500 calls and executes the programs and data stored in the memory 520 to implement the following functions.

Optionally, the processor 500 is configured to read the program in the memory 520 to perform the following processes:

configuring for a user equipment (UE), a target measurement gap for an aperiodic downlink PRS or a semi-persistent downlink PRS; where the target measurement gap is an aperiodic measurement gap or a semi-persistent measurement gap.

Optionally, the processor 500 executes the program to perform the following steps:

determining the target measurement gap according to target message information, where the target message information is UE positioning measurement capability information reported by the UE or historical data information reported by the UE.

Optionally, a time unit of the target measurement gap is associated with the UE positioning measurement capability information reported by the UE.

The time unit of the target measurement gap is sub-frame, slot, or orthogonal frequency division multiplexing (OFDM) symbol.

Optionally, the processor 500 executes the program to perform the following steps:

transmitting a configuration parameter of the target measurement gap to the UE;

and/or,

configuring a target duration of the aperiodic downlink PRS or semi-persistent downlink PRS for the UE; where the target duration is a sub-frame, slot or OFDM symbol where the aperiodic downlink PRS or semi-persistent downlink PRS is located. The target measurement gap is configured by configuring the target duration.

Optionally, the processor 500 executes the program to perform the following steps:

transmitting the configuration parameter of the target measurement gap to the UE through first signaling; where the first signaling is LTE positioning protocol (LPP) signaling, radio resource control (RRC) signaling, medium access control control element (MAC-CE) signaling or downlink control information (DCI) signaling.

Optionally, in case that the target measurement gap is an aperiodic measurement gap for an aperiodic downlink PRS, the processor 500 executes the program to perform the following steps:

determining a minimum value of starting moments of aperiodic downlink positioning reference signal PRS resource sets from all downlink cells, as a first starting moment of the aperiodic measurement gap;

determining a maximum value of end moments of the aperiodic downlink PRS resource sets from all downlink cells, as a first end moment of the aperiodic measurement gap;

transmitting a first configuration parameter of the aperiodic measurement gap to the UE;

where the first configuration parameter includes: any two of the first starting moment, the first end moment and a first duration; and the first duration is a duration from the first starting moment to the first end moment.

Optionally, in case that the target measurement gap is a semi-persistent measurement gap for a semi-persistent downlink PRS, the processor 500 executes the program to perform the following steps:

in one semi-persistent downlink PRS period, determining a minimum value of starting moments of semi-persistent downlink PRS resource sets from all downlink cells, as a second starting moment of the semi-persistent measurement gap;
in the semi-persistent downlink PRS period, determining a maximum value of end moments of semi-persistent downlink PRS resource sets from all downlink cells, as a second end moment of the semi-persistent measurement gap;
transmitting a second configuration parameter of the semi-persistent measurement gap to the UE;
where the second configuration parameter includes: a repetition period of the semi-persistent measurement gap and a configuration parameter of one semi-persistent measurement gap.

The configuration parameter of the one semi-persistent measurement gap includes: any two of the second starting moment, the second end moment and a second duration; and the second duration is a duration from the second starting moment to the second end moment.

Optionally, the processor 500 executes the program to perform the following steps:

transmitting second signaling to the UE, where the second signaling is used to activate the semi-persistent measurement gap;
or,
transmitting third signaling to the UE, where the third signaling is used to instruct to activate the semi-persistent downlink PRS and activate the semi-persistent measurement gap.

Optionally, the UE positioning measurement capability information includes at least one of the following:

in the same sub-frame or slot, whether UE is able to simultaneously perform positioning measurement and downlink processing;
in a downlink activated bandwidth part, whether UE is able to simultaneously perform positioning measurement and downlink processing;
in different bandwidth parts of the same frequency band, whether UE is able to simultaneously perform positioning measurement and downlink processing; or,
in different frequency bands, whether UE is able to simultaneously perform positioning measurement and downlink processing;
where the downlink processing includes downlink channel processing or processing of downlink signals other than downlink PRS.

The transceiver 510 is configured to receive and transmit data under control of the processor 500.

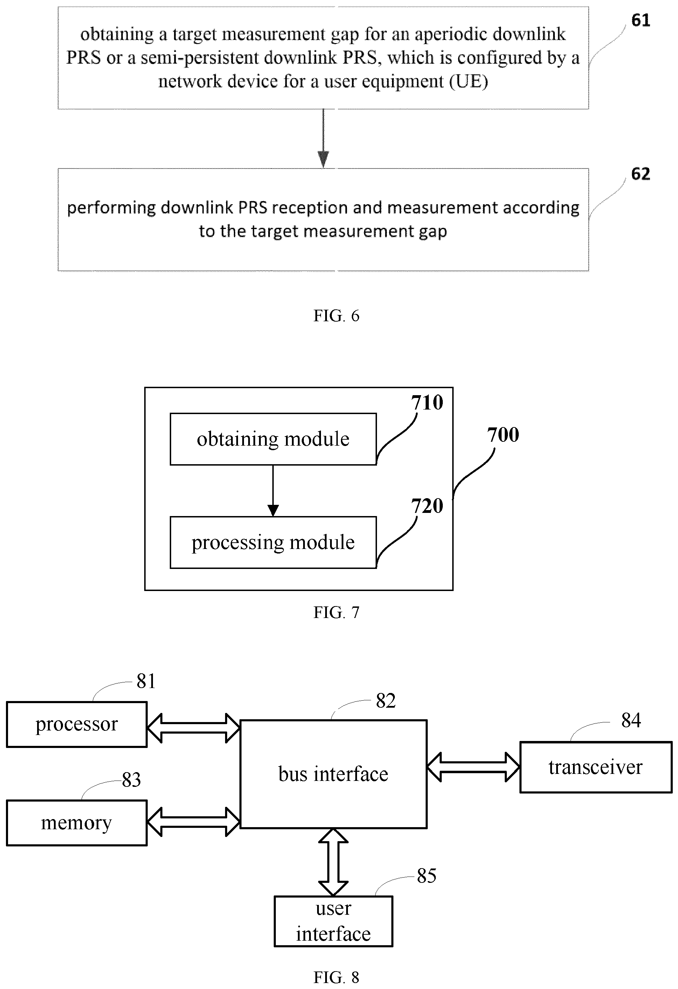

In FIG. 7, a bus architecture may include any number of interconnected buses and bridges. Specifically, various circuits of one or more processors, which are represented by the processor 500, and the memory, which is represented by the memory 520, are linked together. The bus architecture may link various other circuits, such as a peripheral device, voltage regulator and a power management circuit together. These features are well known in this field, therefore, the present disclosure does not make further description on these features. The bus interface provides an interface. The transceiver 510 may be multiple elements, including a transmitter and a receiver and provide units, which communicate with other devices on the transmission medium. The processor 500 is responsible for managing the bus architecture and common processing and the memory 520 may store data used by the processor 500 when executing the operations.

Those skilled in the art can understand that all or part of the steps in the foregoing embodiments may be implemented by hardware, or may be implemented by instructing relevant hardware through a computer program. The computer program includes instructions for executing part or all of the steps of the foregoing method; and the computer program may be stored in a readable storage medium, which can be any form of storage medium.

One embodiment of the present disclosure further provides a computer-readable storage medium including programs or instructions stored thereon. The programs or instructions are executed by a processor to perform each process in the measurement configuration method in the embodiment of the present disclosure, to achieve the same technical effects, which will not be repeated here to avoid repetition.

The processor is the processor in the electronic device described in the above embodiments. The readable storage medium includes a computer-readable storage medium, such as a computer read-only memory (ROM), a random access memory (RAM), a magnetic disk or an optical disk.

The above describes the measurement configuration method of the embodiment of the present disclosure from the network device, and a measurement method at the UE will be further described hereinafter with reference to the accompanying drawings.

As shown in FIG. 6, one embodiment of the present disclosure provides a measurement method, including: Step 61: obtaining a target measurement gap for an aperiodic downlink PRS or a semi-persistent downlink PRS, which is configured by a network device for a user equipment (UE).

The target measurement gap is an aperiodic measurement gap or a semi-persistent measurement gap.

Optionally, the target measurement gap for the aperiodic downlink PRS is an aperiodic measurement gap, and the target measurement gap for the semi-persistent measurement gap is a semi-persistent measurement gap.

Optionally, the measurement gap for the aperiodic downlink PRS or the semi-persistent downlink PRS may be a measurement gap dedicated to positioning, that is, the measurement gap for the aperiodic downlink PRS or the semi-persistent downlink PRS occupies a different time resource from a current measurement gap used for other purposes; or, the measurement gap for the aperiodic downlink PRS or the semi-persistent downlink PRS and the current measurement gap used for other purposes may also multiplex the same time resource.

Step 62: performing downlink PRS reception and measurement according to the target measurement gap.

In the embodiment of the present disclosure, the network device configures for the UE, the target measurement gap for the aperiodic downlink PRS or the semi-persistent downlink PRS, so that the UE can receive and process the aperiodic downlink PRS or semi-persistent downlink PRS according to the aperiodic measurement gap or semi-persistent measurement gap configured by the network device, which can solve the problem that there is no solution for processing an aperiodic downlink PRS or a semi-persistent downlink PRS within a measurement gap; and which can further avoid the problem that for processing an aperiodic downlink PRS or semi-persistent downlink PRS within a periodic measurement gap, the UE cannot process the downlink PRS, or the problem of not being able to meet requirements of low positioning delay, that is, the positioning delay can be reduced.

Optionally, the step of obtaining a target measurement gap for an aperiodic downlink PRS or a semi-persistent downlink PRS, which is configured by a network device for a user equipment (UE), includes: receiving a configuration parameter of the target measurement gap transmitted by the network device; and/or, obtaining a target duration of the aperiodic downlink PRS or semi-persistent downlink PRS configured by the network device for the UE; where the target duration is a sub-frame, slot or OFDM symbol where the aperiodic downlink PRS or semi-persistent downlink PRS is located. The target measurement gap is configured by configuring the target duration.

The receiving a configuration parameter of the target measurement gap transmitted by the network device is to receive the target measurement gap configured by the network device for the UE in an explicit configuration manner. Specifically, the configuration method for configuring, by the network device in the explicit manner, the target measurement gap for the UE, may be referred to the embodiments on the network device side, and will not be repeated here to avoid repetition.

Optionally, the step of receiving a configuration parameter of the target measurement gap transmitted by the network device, may include: receiving the configuration parameter of the target measurement gap transmitted by the network device through first signaling; where the first signaling may be: LTE positioning protocol (LPP) signaling, radio resource control (RRC) signaling, medium access control control element (MAC-CE) signaling or downlink control information (DCI) signaling.

Optionally, for an aperiodic downlink PRS, the receiving a configuration parameter of the target measurement gap transmitted by the network device, may include: receiving a first configuration parameter of the aperiodic measurement gap for the aperiodic downlink PRS transmitted by the network device; where the first configuration parameter includes any two of a first starting moment of the aperiodic measurement gap, a first end moment of the aperiodic measurement gap and a first duration; and the first duration is a duration from the first starting moment to the first end moment.

Optionally, for a semi-persistent downlink PRS, the step of receiving a configuration parameter of the target measurement gap transmitted by the network device, may include: receiving a second configuration parameter of the semi-persistent measurement gap for the semi-persistent downlink PRS transmitted by the network device; where the second configuration parameter includes: a repetition period of the semi-persistent measurement gap and a configuration parameter of one semi-persistent measurement gap; the configuration parameter of the one semi-persistent measurement gap includes any two of the second starting moment of the semi-persistent measurement gap, the second end moment of the semi-persistent measurement gap and a second duration; and the second duration is a duration from the second starting moment to the second end moment.

Optionally, for the semi-persistent downlink PRS, the method further includes: receiving second signaling transmitted by the network device; where the second signaling is used to activate the semi-persistent measurement gap; or, receive third signaling transmitted by the network device, where the third signaling is used to activate the semi-persistent downlink PRS and activate the semi-persistent measurement gap.

Optionally, in case of obtaining a target duration of the aperiodic downlink PRS or semi-persistent downlink PRS configured by the network device for the UE, that is, in case that the network device configures a target measurement gap for the UE through implicit configuration, the performing downlink PRS reception and measurement according to the target measurement gap includes one of the following modes:

Mode 1: according to UE positioning measurement capability information, determining to receive and measure the downlink PRS within the target duration, and not receive and process a downlink channel or a first downlink signal;
Mode 2: according to the UE positioning measurement capability information, determining to perform downlink PRS reception and measurement within the target duration, and receive and process the downlink channel or the first downlink signal;
where the first downlink signal is a downlink signal other than the downlink PRS.

Optionally, the method may further include: transmitting UE positioning measurement capability information to the network device.

Optionally, the UE positioning measurement capability information includes at least one of the following:

in the same sub-frame or slot, whether UE is able to simultaneously perform positioning measurement and downlink processing;
in a downlink activated bandwidth part, whether UE is able to simultaneously perform positioning measurement and downlink processing;
in different bandwidth parts of the same frequency band, whether UE is able to simultaneously perform positioning measurement and downlink processing; or,
in different frequency bands, whether UE is able to simultaneously perform positioning measurement and downlink processing;
where the downlink processing includes downlink channel processing or processing of downlink signals other than downlink PRS.

The UE may directly transmit the UE positioning measurement capability information to a serving base station; or the UE first transmits the UE positioning measurement capability information to a location management function (LMF), and then the LMF forwards it to the serving base station. Meanwhile, the serving base station also needs to obtain downlink PRS configuration information of all non-serving base stations.

Optionally, the serving base station obtaining downlink PRS configuration information of all non-serving base stations, includes:

transmitting, by one non-serving base station, downlink PRS configuration information of the cell to the LMF, and forwarding, by the LMF, the downlink PRS configuration information to the serving base station;
or,
directly exchanging the downlink PRS configuration information between the non-serving base station and the serving base station through Xn interface.

For example, in case that the network device configures the target measurement gap for the UE through implicit configuration, according to the UE positioning measurement capability information reported by the UE to the network device, the UE selects one of the foregoing modes 1 and 2 for processing within the determined target measurement gap.

Optionally, the foregoing modes 1 and 2 may be predefined through a protocol, or notified through higher-layer signaling.

Optionally, in case of obtaining the target duration of the aperiodic downlink PRS or semi-persistent downlink PRS configured by the network device for the UE, the step of performing downlink PRS reception and measurement according to the target measurement gap, includes:

determining the target measurement gap according to the UE positioning measurement capability information;
within the target measurement gap, performing downlink PRS reception and measurement.

That is to say, in case that the network device configures the target measurement gap for the UE through implicit configuration, according to the agreement, the UE can determine the target measurement gap within the target duration of the aperiodic downlink PRS or semi-persistent downlink PRS configured by the network device for the UE, so as to receive and process the downlink PRS.

Optionally, in case that the positioning measurement capability information includes: in the same sub-frame or slot, whether UE is able to simultaneously perform positioning measurement and downlink processing, the step of determining the target measurement gap according to the UE positioning measurement capability information, may include:

in the same sub-frame or slot, in case that the UE is unable to simultaneously perform positioning measurement and downlink processing, determining the target measurement gap according to association between the UE positioning measurement capability information and configuration parameters of the measurement gap;

in the same subframe or slot, in case that the UE is able to simultaneously perform positioning measurement and downlink processing, determining the target measurement gap according to association between the UE positioning measurement capability information and configuration parameters of the measurement gap as well as a valid condition;

where the downlink processing includes downlink channel processing or processing of downlink signals other than downlink PRS.

Optionally, the valid condition includes:

in frequency division duplex mode, determining a first effective slot of a sub-frame where the aperiodic downlink PRS or semi-persistent downlink PRS is located, as the target measurement gap; where the first effective slot is a slot in which N1 OFDM symbols are reserved between the aperiodic downlink PRS or semi-persistent downlink PRS and a downlink channel or a first downlink signal in the same slot;

in time division duplex mode, determining a second effective slot of a slot where the aperiodic downlink PRS or semi-persistent downlink PRS is located, as the target measurement gap; where the second effective slot is a downlink slot in which N1 OFDM symbols are reserved between the aperiodic downlink PRS or semi-persistent downlink PRS and the downlink channel or the first downlink signal, or, the second effective slot is a flexible slot in which at least N2 OFDM symbols are reserved between uplink OFDM symbols before start of each downlink PRS resource and at least N2 OFDM symbols are reserved between uplink OFDM symbols after end of each downlink PRS resource.

where N1 and N2 are positive integers greater than or equal to 1.

Specifically, during the target duration of aperiodic downlink PRS or semi-persistent downlink PRS configured by the network device for the UE, the rules for determining by the UE the target measurement gap according to the agreement, may refer to the above Table 2 and Table 3, which are not repeated here to avoid repetition.

Optionally, in case that the UE positioning measurement capability information includes: whether the UE is able to simultaneously perform positioning measurement and downlink processing in a downlink active bandwidth part, in different bandwidth parts of the same frequency band or in different frequency bands, the performing downlink PRS reception and measurement according to the target measurement gap, includes:

performing the downlink PRS reception and measurement in the downlink active bandwidth part, in different bandwidth parts of the same frequency band or in different frequency bands, according to the UE positioning measurement capability information;

where the downlink processing includes downlink channel processing or processing of downlink signals other than downlink PRS.

Specifically, the rules for performing, by the UE, the downlink PRS reception and processing according to the agreement, during the target duration of aperiodic downlink PRS or semi-persistent downlink PRS configured by the network device for the UE, may refer to the above Table 4, which are not repeated here to avoid repetition.

The above embodiments respectively introduce the measurement method of the present disclosure, and a corresponding UE in one embodiment will be further described hereinafter with reference to the accompanying drawings.

As shown in FIG. 7, one embodiment of the present disclosure provides a user equipment (UE) 700, including:

an obtaining module 710 configured to obtain a target measurement gap for an aperiodic downlink PRS or a semi-persistent downlink PRS, which is configured by a network device for the UE;

a processing module 720 configured to perform downlink PRS reception and measurement according to the target measurement gap.

Optionally, the obtaining module 710 includes:

a receiving submodule configured to receive a configuration parameter of the target measurement gap transmitted by the network device;

and/or,

an obtaining submodule configured to obtain a target duration of the aperiodic downlink PRS or semi-persistent downlink PRS configured by the network device for the UE; where the target duration is a sub-frame, slot or OFDM symbol where the aperiodic downlink PRS or semi-persistent downlink PRS is located. The target measurement gap is configured by configuring the target duration.

Optionally, the receiving submodule includes:

a first receiving unit configured to receive the configuration parameter of the target measurement gap transmitted by the network device through first signaling;

where the first signaling may be: LTE positioning protocol (LPP) signaling, radio resource control (RRC) signaling, medium access control control element (MAC-CE) signaling or downlink control information (DCI) signaling.

Optionally, the receiving submodule includes:

a second receiving unit configured to receive a first configuration parameter of the aperiodic measurement gap for the aperiodic downlink PRS transmitted by the network device;

where the first configuration parameter includes any two of a first starting moment of the aperiodic measurement gap, a first end moment of the aperiodic measurement gap and a first duration; and the first duration is a duration from the first starting moment to the first end moment.

Optionally, the receiving submodule includes:

a third receiving unit configured to receive a second configuration parameter of the semi-persistent measurement gap for the semi-persistent downlink PRS transmitted by the network device;

where the second configuration parameter includes: a repetition period of the semi-persistent measurement gap and a configuration parameter of one semi-persistent measurement gap;

the configuration parameter of the one semi-persistent measurement gap includes any two of the second starting moment of the semi-persistent measurement gap, the second end moment of the semi-persistent measurement gap and a second duration; and the second duration is a duration from the second starting moment to the second end moment.

Optionally, the UE 700 further includes:

a first receiving module configured to receive second signaling transmitted by the network device; where the second signaling is used to activate the semi-persistent measurement gap;

or,

a second receiving module configured to receive third signaling transmitted by the network device, where the third signaling is used to activate the semi-persistent downlink PRS and activate the semi-persistent measurement gap.

Optionally, in case of obtaining a target duration of the aperiodic downlink PRS or semi-persistent downlink PRS configured by the network device for the UE, the processing module 720 includes:

a first determination submodule configured to, according to UE positioning measurement capability information, determine to receive and measure the downlink PRS within the target duration, and not receive and process a downlink channel or a first downlink signal;

or,

a second determination submodule configured to, according to the UE positioning measurement capability information, determine to perform downlink PRS reception and measurement within the target duration, and receive and process the downlink channel or the first downlink signal;

where the first downlink signal is a downlink signal other than the downlink PRS.

Optionally, the UE 700 further includes:

a transmission module configured to transmit UE positioning measurement capability information to the network device.

Optionally, in case of obtaining the target duration of the aperiodic downlink PRS or semi-persistent downlink PRS configured by the network device for the UE, the processing module 720 includes:

a third determination submodule configured to determine the target measurement gap according to the UE positioning measurement capability information;

a first processing submodule configured to, within the target measurement gap, perform downlink PRS reception and measurement.

Optionally, in case that the positioning measurement capability information includes: in the same sub-frame or slot, whether UE is able to simultaneously perform positioning measurement and downlink processing, the third determining submodule includes:

a first determining unit configured to, in the same sub-frame or slot, in case that the UE is unable to simultaneously perform positioning measurement and downlink processing, determine the target measurement gap according to association between the UE positioning measurement capability information and configuration parameters of the measurement gap;

a second determining unit configured to, in the same subframe or slot, in case that the UE is able to simultaneously perform positioning measurement and downlink processing, determine the target measurement gap according to association between the UE positioning measurement capability information and configuration parameters of the measurement gap as well as a valid condition;

where the downlink processing includes downlink channel processing or processing of downlink signals other than downlink PRS.

Optionally, the valid condition includes:

in frequency division duplex mode, determining a first effective slot of a sub-frame where the aperiodic downlink PRS or semi-persistent downlink PRS is located, as the target measurement gap; where the first effective slot is a slot in which N1 OFDM symbols are reserved between the aperiodic downlink PRS or semi-persistent downlink PRS and a downlink channel or a first downlink signal in the same slot;

in time division duplex mode, determining a second effective slot of a slot where the aperiodic downlink PRS or semi-persistent downlink PRS is located, as the target measurement gap; where the second effective slot is a downlink slot in which N1 OFDM symbols are reserved between the aperiodic downlink PRS or semi-persistent downlink PRS and the downlink channel or the first downlink signal, or, the second effective slot is a flexible slot in which at least N2 OFDM symbols are reserved between uplink OFDM symbols before start of each downlink PRS resource and at least N2 OFDM symbols are reserved between uplink OFDM symbols after end of each downlink PRS resource.

where N1 and N2 are positive integers greater than or equal to 1.

Optionally, in case that the UE positioning measurement capability information includes: whether the UE is able to simultaneously perform positioning measurement and downlink processing in a downlink active bandwidth part, in different bandwidth parts of the same frequency band or in different frequency bands, the processing module 720 includes:

a second processing submodule configured to perform the downlink PRS reception and measurement in the downlink active bandwidth part, in different bandwidth parts of the same frequency band or in different frequency bands, according to the UE positioning measurement capability information;

where the downlink processing includes downlink channel processing or processing of downlink signals other than downlink PRS.

The UE embodiments of the present disclosure are corresponding to the foregoing method embodiments, and all implementation means in the foregoing method embodiments are applicable to the UE embodiments, and can also achieve the same technical effects.

According to the UE 700 in the embodiment of the present disclosure, the network device configures for the UE, the target measurement gap for the aperiodic downlink PRS or the semi-persistent downlink PRS, so that the UE can receive and process the aperiodic downlink PRS or semi-persistent downlink PRS according to the aperiodic measurement gap or semi-persistent measurement gap configured by the network device, which can solve the problem that there is no solution for processing an aperiodic downlink PRS or a semi-persistent downlink PRS within a measurement gap; and which can further avoid the problem that for processing an aperiodic downlink PRS or semi-persistent downlink PRS within a periodic measurement gap, the UE cannot process the downlink PRS, or the problem of not being able to meet requirements of low positioning delay, that is, the positioning delay can be reduced.

As shown in FIG. 8, one embodiment of the present disclosure provides a user equipment (UE), including: a processor 81, a memory 83 coupled to the processor 81 through a bus interface 82. The memory 83 is configured to store programs and data used by the processor 81 when performing operations. The processor 81 calls and executes the programs and data stored in the memory 83 to implement the following functions.

Optionally, the processor 81 executes the program to perform the following steps:

obtaining a target measurement gap for an aperiodic downlink PRS or a semi-persistent downlink PRS, which is configured by a network device for the UE; where the target measurement gap is an aperiodic measurement gap or semi-persistent measurement gap;
performing downlink PRS reception and measurement according to the target measurement gap.

Optionally, the processor 81 executes the program to perform the following steps:

receiving a configuration parameter of the target measurement gap transmitted by the network device;
and/or,
obtaining a target duration of the aperiodic downlink PRS or semi-persistent downlink PRS configured by the network device for the UE; where the target duration is a sub-frame, slot or OFDM symbol where the aperiodic downlink PRS or semi-persistent downlink PRS is located. The target measurement gap is configured by configuring the target duration.

Optionally, the processor 81 executes the program to perform the following steps:

receiving the configuration parameter of the target measurement gap transmitted by the network device through first signaling;
where the first signaling may be: LTE positioning protocol (LPP) signaling, radio resource control (RRC) signaling, medium access control control element (MAC-CE) signaling or downlink control information (DCI) signaling.

Optionally, the processor 81 executes the program to perform the following steps:

receiving a first configuration parameter of the aperiodic measurement gap for the aperiodic downlink PRS transmitted by the network device;
where the first configuration parameter includes any two of a first starting moment of the aperiodic measurement gap, a first end moment of the aperiodic measurement gap and a first duration; and the first duration is a duration from the first starting moment to the first end moment.

Optionally, the processor 81 executes the program to perform the following steps:

receiving a second configuration parameter of the semi-persistent measurement gap for the semi-persistent downlink PRS transmitted by the network device;
where the second configuration parameter includes: a repetition period of the semi-persistent measurement gap and a configuration parameter of one semi-persistent measurement gap;
the configuration parameter of the one semi-persistent measurement gap includes any two of the second starting moment of the semi-persistent measurement gap, the second end moment of the semi-persistent measurement gap and a second duration; and the second duration is a duration from the second starting moment to the second end moment.

Optionally, the processor 81 executes the program to perform the following steps:

receiving second signaling transmitted by the network device; where the second signaling is used to activate the semi-persistent measurement gap;
or,
receiving third signaling transmitted by the network device, where the third signaling is used to activate the semi-persistent downlink PRS and activate the semi-persistent measurement gap.

Optionally, in case of obtaining a target duration of the aperiodic downlink PRS or semi-persistent downlink PRS configured by the network device for the UE, the processor 81 executes the program to perform the following steps:

according to UE positioning measurement capability information, determining to receive and measure the downlink PRS within the target duration, and not receive and process a downlink channel or a first downlink signal;
or,
according to the UE positioning measurement capability information, determining to perform downlink PRS reception and measurement within the target duration, and receive and process the downlink channel or the first downlink signal;
where the first downlink signal is a downlink signal other than the downlink PRS.

Optionally, the processor 81 executes the program to perform the following steps:
transmitting UE positioning measurement capability information to the network device.

Optionally, in case of obtaining the target duration of the aperiodic downlink PRS or semi-persistent downlink PRS configured by the network device for the UE, the processor executes the program to perform the following steps:

determining the target measurement gap according to the UE positioning measurement capability information;
within the target measurement gap, performing downlink PRS reception and measurement.

Optionally, in case that the positioning measurement capability information includes: in the same sub-frame or slot, whether UE is able to simultaneously perform positioning measurement and downlink processing, the processor 81 executes the program to perform the following steps:

in the same sub-frame or slot, in case that the UE is unable to simultaneously perform positioning measurement and downlink processing, determining the target measurement gap according to association between the UE positioning measurement capability information and configuration parameters of the measurement gap;
in the same subframe or slot, in case that the UE is able to simultaneously perform positioning measurement and downlink processing, determining the target measurement gap according to association between the UE positioning measurement capability information and configuration parameters of the measurement gap as well as a valid condition;
where the downlink processing includes downlink channel processing or processing of downlink signals other than downlink PRS.

Optionally, the valid condition includes:

in frequency division duplex mode, determining a first effective slot of a sub-frame where the aperiodic downlink PRS or semi-persistent downlink PRS is located, as the target measurement gap; where the first effective slot is a slot in which N1 OFDM symbols are reserved between the aperiodic downlink PRS or semi-persistent downlink PRS and a downlink channel or a first downlink signal in the same slot;
in time division duplex mode, determining a second effective slot of a slot where the aperiodic downlink PRS or semi-persistent downlink PRS is located, as the target measurement gap; where the second effective slot is a downlink slot in which N1 OFDM symbols are reserved between the aperiodic downlink PRS or semi-persistent downlink PRS and the downlink channel or the first downlink signal, or, the second effective slot is a flexible slot in which at least N2 OFDM symbols are reserved between uplink OFDM symbols before start of each downlink PRS resource and at least N2 OFDM symbols are reserved between uplink OFDM symbols after end of each downlink PRS resource.
where N1 and N2 are positive integers greater than or equal to 1.

Optionally, in case that the UE positioning measurement capability information includes: whether the UE is able to simultaneously perform positioning measurement and downlink processing in a downlink active bandwidth part, in different bandwidth parts of the same frequency band or in different frequency bands, the processor 81 executes the program to perform the following steps:

performing the downlink PRS reception and measurement in the downlink active bandwidth part, in different bandwidth parts of the same frequency band or in different frequency bands, according to the UE positioning measurement capability information;
where the downlink processing includes downlink channel processing or processing of downlink signals other than downlink PRS.

A transceiver 84 is coupled to the bus interface 82, and is configured to receive and transmit data under control of the processor 81.
It is to be noted that, in FIG. 8, the bus architecture may include any number of interconnected buses and bridges. Specifically, various circuits of one or more processors, which are represented by the processor 81, and the memory, which is represented by the memory 83, are linked together. The bus architecture may link various other circuits, such as a peripheral device, voltage regulator and a power management circuit together. These features are well known in this field, therefore, the present disclosure does not make further description on these features. The bus interface provides an interface. The transceiver 84 may be multiple elements, including a transmitter and a receiver and provide units, which communicate with other devices on the transmission medium. As for different UEs, the user interface 85 may further externally connect or internally connect interfaces of required devices. The connected devices may include but not be limited to a keypad, monitor, speaker, microphone, joystick, etc. The processor 81 is responsible for managing the bus architecture and usual processing and the memory 83 may store the data used by the processor 81 when executing the operations.

Those skilled in the art can understand that all or part of the steps in the foregoing embodiments may be implemented by hardware, or may be implemented by instructing relevant hardware through a computer program. The computer program includes instructions for executing part or all of the steps of the foregoing method; and the computer program may be stored in a readable storage medium, which can be any form of storage medium.

One embodiment of the present disclosure further provides a computer-readable storage medium including programs or instructions stored thereon. The programs or instructions are executed by a processor to perform each process in the measurement method in the embodiment of the present disclosure, to achieve the same technical effects, which will not be repeated here to avoid repetition.

The processor is the processor in the electronic device described in the above embodiments. The readable storage medium includes a computer-readable storage medium, such as a computer read-only memory (ROM), a random access memory (RAM), a magnetic disk or an optical disk.

The foregoing methods of the present disclosure will be described hereinafter with reference to specific embodiments at the network device side and at the UE side.

Embodiment 1: a network device (a serving base station is taken as an example hereinafter) uses explicit signaling to notify a UE of a positioning measurement gap for an aperiodic or semi-persistent downlink PRS, where N=8.

An execution process at the UE side is as follows:

At step 1, the UE reports UE positioning measurement capability information to the serving base station.
At step 2, the UE receives an explicit configuration parameter of an aperiodic/semi-persistent positioning measurement gap transmitted by the serving base station.
At step 3, the UE performs corresponding processing, respectively, according to the explicit configuration parameter obtained in the above step 2.

For example, for the explicitly configured positioning measurement gap, the UE performs downlink PRS reception and measurement processing at a positioning measurement gap indicated by the explicit configuration parameter, thereby obtaining a positioning measurement result.

At step 4, the UE reports the positioning measurement result to the network, or performs UE position calculation based on the positioning measurement result.

Steps executed at the serving base station side are as follows.

At step 1, according to UE positioning measurement capability information reported by the UE, the serving base station selects to explicitly configure aperiodic/semi-persistent positioning measurement gap.

For example, for an aperiodic downlink PRS, the positioning measurement gap is aperiodic, and a configuration parameter may be defined in the following manner.

A starting moment T1 of the aperiodic positioning measurement gap is a minimum value of starting moments of aperiodic downlink PRS resource sets from all downlink cells configured by the network. An end moment T2 of the aperiodic positioning measurement gap is a maximum value of end moments of the aperiodic downlink PRS resource sets from all downlink cells configured by the network. A duration L1 of the aperiodic positioning measurement gap is expressed as L1=T2-T1.

For example, a total of N=8 TRPs are configured, T1 represents the starting moment of the aperiodic positioning measurement gap, T2 represents the end moment of the aperiodic positioning measurement gap, and L1 represents the duration of the aperiodic positioning measurement gap.

The serving base station notifies any two values of T1, T2 and L1 through explicit signaling. The explicit signaling may be LPP signaling, RRC signaling, MAC-CE or DCI signaling.

$$T1=\min\{T1(TRP\#1), T1(TRP\#2), ..., T1(TRP\#8)\}=T1(TRP\#1);$$

$$T2=\max\{T2(TRP\#1), T2(TRP\#2), ..., T2(TRP\#8)\}=T2(TRP\#8);$$

$$L1=T2-T1=T2(TRP\#8)-T1(TRP\#1).$$

Time units of T1, T2 and L1 may be sub-frames, slots or OFDM symbols.

Example 1: for an indoor factory (InF) scenario, the maximum TRP interval is 300 meters, a transmission delay is 1 microsecond (us), within CP range of FDM symbols (for SCS=15KHz, a CP length is 4.6us/5.2us). As shown in FIG. 2, by taking slot as a unit, a total of N=8 TRPs are configured, each TRP includes 1 downlink PRS resource set, each downlink PRS resource set includes 4 downlink PRS resources, and each downlink PRS resource includes 6 OFDM symbols, and the downlink PRS resource sets of all TRPs adopt consecutive slot allocation, i.e., in a time division multiplexing (TDM)

27

manner. Therefore, each downlink PRS resource set occupies 2 consecutive slots. 8 TRPs occupy a total of 16 consecutive downlink slots, that is, L=2N=2*8=16.

For another example: for a semi-persistent positioning measurement gap, a repetition period of the semi-persistent positioning measurement gap is equal to or greater than a repetition period of the semi-persistent downlink PRS. Optionally, in the embodiments of the present disclosure, the repetition period of the semi-persistent positioning measurement gap being equal to the repetition period of the semi-persistent downlink PRS may mean that the repetition period of the semi-persistent positioning measurement gap is the same as the repetition period of the semi-persistent downlink PRS, or there is an integer multiple relationship between the repetition period of the semi-persistent positioning measurement gap and the repetition period of the semi-persistent downlink PRS.

For the positioning measurement gap for the semi-persistent downlink PRS, the configuration parameter may be defined in the following manner: in one semi-persistent downlink PRS period, a starting moment T1 of the semi-persistent positioning measurement gap is a minimum value of starting moments of semi-persistent downlink PRS resource sets from all downlink cells configured by the network; an end moment T2 of the semi-persistent positioning measurement gap is a maximum value of end moments of the semi-persistent downlink PRS resource sets from all downlink cells configured by the network; a duration L2 of the semi-persistent positioning measurement gap is expressed as L2=T2-T1.

For example, a total of 8 TRPs are configured, and TDM multiplexing is adopted between downlink PRS resource sets of different TRPs. T1 represents a starting moment of the semi-persistent positioning measurement gap, T2 represents an end moment of the semi-persistent positioning measurement gap, L2 represents a duration of the semi-persistent positioning measurement gap in one cycle, and P represents a repetition period of the semi-persistent positioning measurement gap.

The network device may notify P and any two values of T1, T2 and L2 through explicit signaling. The explicit signaling may be LPP signaling, RRC signaling, MAC-CE signaling or DCI signaling.

As shown in Fig. 3, by taking slot as a unit, a total of 8 TRPs are configured, each TRP includes 1 downlink PRS resource set; each downlink PRS resource set includes 4 downlink PRS resources; and each downlink PRS resource includes 6 OFDM symbols. The downlink PRS resource sets of all TRPs adopt consecutive slot allocation, i.e., in a time division multiplexing (TDM) manner. Therefore, each downlink PRS resource set occupies 2 consecutive slots. The N TRPs occupy a total of 2N consecutive downlink slots, that is, L=2N. The semi-persistent downlink PRS is repeated twice, P=8*8=64.

$$T1=\min\{T1(TRP\#1), T1(TRP\#2), ..., T1(TRP\#8)\}=T1(TRP\#1);$$

$$T2=\max\{T2(TRP\#1), T2(TRP\#2), ..., T2(TRP\#8)\}=T1(TRP\#1);$$

$$L=T2-T1=6;$$

$$T3=T1+P=T1+64;$$

$$T4=T2+P=T2+64.$$

At step 2, the serving base station notifies the UE of the configuration parameter of the aperiodic/semi-persistent positioning measurement gap through signaling. The signaling may be RRC signaling, MAC-CE signaling or DCI signaling.

For the semi-persistent positioning measurement gap, when the semi-persistent positioning PRS is deactivated, it will automatically disabled.

At step 3, the serving base station transmits the aperiodic/semi-persistent downlink PRS to the UE.

Embodiment 2: a network device (such as a serving base station) notifies a UE of a positioning measurement gap for an aperiodic or semi-persistent downlink PRS in an explicit and implicit signaling manner.

Steps executed at the UE are as follows.

At step 1, the UE reports UE positioning measurement capability information to the serving base station.

At step 2, the UE receives an explicit configuration parameter of an aperiodic/semi-persistent positioning measurement gap transmitted by the serving base station, and the UE obtains an implicit configuration parameter of the aperiodic positioning measurement gap in a protocol predefined manner.

At step 3, the UE performs processing according to the configuration parameter obtained in the above step 2.

For example, for an explicitly configured positioning measurement gap, the UE performs downlink PRS reception and measurement processing at a positioning measurement gap indicated by the explicit configuration parameter, thereby obtaining a positioning measurement result. For an implicitly configured positioning measurement gap, according to predefined rules, the UE performs downlink positioning signal reception and measurement processing by default in a sub-frame, slot or OFDM symbol where the aperiodic downlink PRS is configured, thereby obtaining a positioning measurement result.

Optionally, in the manner of combining explicit configuration with implicit configuration, some parameters may be configured explicitly, and some other parameters may be predefined by the protocol (i.e., implicit configuration).

At step 4, the UE reports the positioning measurement result to the network, or performs UE position calculation based on the positioning measurement result.

Steps executed at the serving base station are as follows.

At step 1, the serving base station selects according to UE positioning capability reported by the UE, or autonomously selects, to configure an aperiodic positioning measurement gap in an explicit and implicit signaling manner.

For example, for the manner of combining explicit configuration with implicit configuration, first, proceeding to step 1.2, then proceeding to step 1.1. If a parameter of the implicit configuration conflicts with a parameter of the explicit configuration, the parameter of the explicit configuration shall prevail.

Step 1.1: explicit configuration: referring to the above embodiment 1, which are not repeated here to avoid repetition.

Step 1.2: implicit configuration: implicitly configuring the positioning measurement gap, that is, it is agreed to not notify the UE of the positioning measurement gap through explicit signaling, but to perform downlink positioning signal reception and measurement processing by default in a sub-frame, slot or OFDM symbol where the aperiodic downlink PRS is configured, in a predefined manner in the protocol.

According to the UE positioning measurement capability reported by the UE to the network, the UE selects the following mode 1 for processing in an implicit positioning measurement gap.

Mode 1: the UE can only perform positioning measurement operation, and is unable to receive and process other downlink channels/signals. The association between the UE positioning measurement capability level, the UE positioning measurement capability, the starting moment T1, the duration L and the end moment T2, is shown in the above Table 2, where N=4.

Valid slots and valid condition judgment rules for the above UE positioning measurement capability levels of level 4 and level 5 in Table 2 are shown in Table 3, where N1 and N2 are positive integers greater than or equal to 1, for example, N1=2, N2=2.

Table 4 shows corresponding relationship between the UE positioning measurement capability levels and bandwidth-specific UE positioning measurement capability.

The above modes and tables may be predefined in a protocol or notified by high-level signaling.

At step 2, the serving base station notifies the UE of the configuration parameter of the aperiodic positioning measurement gap through signaling. The signaling may be RRC signaling, MAC-CE signaling or DCI signaling.

At step 3, the serving base station transmits the aperiodic/semi-persistent downlink PRS to the UE.

In the embodiment of the present disclosure, the target measurement gap for the aperiodic downlink PRS or the semi-persistent downlink PRS is configured for the UE by the network device, which can solve the problem that there is no solution for processing an aperiodic downlink PRS or a semi-persistent downlink PRS within a measurement gap; and which can further avoid the problem that for processing an aperiodic downlink PRS or semi-persistent downlink PRS within a periodic measurement gap, the UE cannot process the downlink PRS, or the problem of not being able to meet requirements of low positioning delay, that is, the positioning delay can be reduced.

In addition, it should be noted that in the devices and methods of the present disclosure, apparently, each component or each step may be decomposed and/or recombined. These decomposition and/or recombination should be regarded as equivalent solutions of the present disclosure. In addition, the steps of performing the above series of processing may be performed naturally in chronological order in the order of description, but do not necessarily need to be performed in chronological order, and some steps may be performed in parallel or independently of each other. Those of ordinary skill in the art can understand that all or any of the steps or components of the method and device of the present disclosure may be implemented in hardware, firmware, software or a combination thereof in any computing device (including processor, storage medium, etc.) or network of computing devices, which can be achieved by those of ordinary skill in the art with their basic programming skills after reading the description of the present disclosure.

Therefore, the object of the present disclosure may also be achieved by running a program or a set of programs on any computing device. The computing device may be a well-known universal device. Therefore, the object of the present disclosure may also be achieved only by providing a program product containing program codes for implementing the method or device. In other words, such a program product also constitutes the present disclosure, and a storage medium storing such a program product also constitutes the present disclosure. Apparently, the storage medium may be any known storage medium or any storage medium developed in the future. It should also be noted that in the devices and methods of the present disclosure, apparently, each component or each step may be decomposed and/or recombined. These decomposition and/or recombination should be regarded as equivalent solutions of the present disclosure. In addition, the steps of performing the above series of processing may be performed naturally in chronological order in the order of description, but do not necessarily need to be performed in chronological order, and some steps may be performed in parallel or independently of each other.

It can be understood that those embodiments described in the embodiments of the present disclosure may be implemented by hardware, software, firmware, middleware, microcode, or a combination thereof. For implementation with hardware, units, modules, sub-units and sub-modules may be implemented in one or more application specific integrated circuits (ASIC), a digital signal processor (DSP), a digital signal processing device (DSP Device, DSPD), a programmable logic device (PLD), a field-programmable gate array (PFGA), a general processor, a controller, a micro-controller, a microprocessor, another electronic unit for implementing the functions of the present disclosure, or their combinations.

**Claims**

1. A measurement configuration method, performed by a network device, comprising:

   configuring for a user equipment, UE, a target measurement gap for an aperiodic downlink PRS or a semi-persistent downlink PRS;
   wherein the target measurement gap is an aperiodic measurement gap or a semi-persistent measurement gap;
   wherein the method further includes:
   determining the target measurement gap according to target information, wherein the target information is UE positioning measurement capability information reported by the UE.

2. The measurement configuration method according to claim 1, wherein a time unit of the target measurement gap is associated with the UE positioning measurement capability information reported by the UE;

   the time unit of the target measurement gap is sub-frame, slot, or orthogonal frequency division multiplexing, OFDM, symbol;
   or,
   wherein the UE positioning measurement capability information includes at least one of the following:

      in the same sub-frame or slot, whether the UE is able to simultaneously perform positioning measurement and downlink processing;
      in a downlink activated bandwidth part, whether the UE is able to simultaneously perform positioning measurement and downlink processing;
      in different bandwidth parts of the same frequency band, whether the UE is able to simultaneously perform positioning measurement and downlink processing; or,
      in different frequency bands, whether the UE is able to simultaneously perform positioning measurement and downlink processing;
      wherein the downlink processing includes downlink channel processing or processing of downlink signals other than downlink PRS.

3. The measurement configuration method according to claim 1, wherein configuring for the UE, the target measurement gap for the aperiodic downlink PRS or semi-persistent downlink PRS, includes:

   transmitting a configuration parameter of the target measurement gap to the UE;
   and/or,
   configuring a target duration of the aperiodic downlink PRS or semi-persistent downlink PRS for the UE; wherein the target duration is a sub-frame, slot or OFDM symbol where the aperiodic downlink PRS or semi-persistent downlink PRS is located, and the target measurement gap is configured by configuring the target duration.

4. The measurement configuration method according to claim 3, wherein in case that the target measurement gap is the aperiodic measurement gap for the aperiodic downlink PRS, the transmitting the configuration parameter of the target measurement gap to the UE, includes:

   determining a minimum value of starting moments of aperiodic downlink positioning reference signal PRS resource sets from all downlink cells, as a first starting moment of the aperiodic measurement gap;
   determining a maximum value of end moments of the aperiodic downlink PRS resource sets from all downlink cells, as a first end moment of the aperiodic measurement gap;

transmitting a first configuration parameter of the aperiodic measurement gap to the UE;
wherein the first configuration parameter includes: any two of the first starting moment, the first end moment and a first duration; and the first duration is a duration from the first starting moment to the first end moment;
or,
wherein in case that the target measurement gap is the semi-persistent measurement gap for the semi-persistent downlink PRS, the transmitting the configuration parameter of the target measurement gap to the UE, includes:

in one semi-persistent downlink PRS period, determining a minimum value of starting moments of semi-persistent downlink PRS resource sets from all downlink cells, as a second starting moment of the semi-persistent measurement gap;
in the semi-persistent downlink PRS period, determining a maximum value of end moments of semi-persistent downlink PRS resource sets from all downlink cells, as a second end moment of the semi-persistent measurement gap;
transmitting a second configuration parameter of the semi-persistent measurement gap to the UE;
wherein the second configuration parameter includes: a repetition period of the semi-persistent measurement gap and a configuration parameter of one semi-persistent measurement gap;
the configuration parameter of the one semi-persistent measurement gap includes: any two of the second starting moment, the second end moment and a second duration; and the second duration is a duration from the second starting moment to the second end moment.

5. A measurement method, performed by a user equipment, UE, comprising:

obtaining a target measurement gap for an aperiodic downlink PRS or a semi-persistent downlink PRS, which is configured by a network device for the UE; wherein the target measurement gap is an aperiodic measurement gap or a semi-persistent measurement gap; and
performing downlink PRS reception and measurement according to the target measurement gap;
wherein the target measurement gap is to be determined according to target information, wherein the target information is UE positioning measurement capability information which is to be reported by the UE.

6. The measurement method according to claim 5, wherein obtaining the target measurement gap for the aperiodic downlink PRS or the semi-persistent downlink PRS, which is configured by the network device for the UE, includes:

receiving a configuration parameter of the target measurement gap transmitted by the network device;
and/or,
obtaining a target duration of the aperiodic downlink PRS or semi-persistent downlink PRS configured by the network device for the UE; wherein the target duration is a sub-frame, slot or OFDM symbol where the aperiodic downlink PRS or semi-persistent downlink PRS is located, and the target measurement gap is configured by configuring the target duration.

7. The measurement method according to claim 6, wherein receiving the configuration parameter of the target measurement gap transmitted by the network device, includes:

receiving a first configuration parameter of the aperiodic measurement gap for the aperiodic downlink PRS transmitted by the network device;
wherein the first configuration parameter includes any two of a first starting moment of the aperiodic measurement gap, a first end moment of the aperiodic measurement gap and a first duration; and the first duration is a duration from the first starting moment to the first end moment;
or,
wherein receiving the configuration parameter of the target measurement gap transmitted by the network device, includes:

receiving a second configuration parameter of the semi-persistent measurement gap for the semi-persistent downlink PRS transmitted by the network device;
wherein the second configuration parameter includes: a repetition period of the semi-persistent measurement gap and a configuration parameter of one semi-persistent measurement gap;
the configuration parameter of the one semi-persistent measurement gap includes any two of the second starting moment of the semi-persistent measurement gap, the second end moment of the semi-persistent measurement gap and a second duration; and the second duration is a duration from the second starting moment to the second end moment.

8. The measurement method according to claim 6, wherein in case of obtaining the target duration of the aperiodic downlink PRS or semi-persistent downlink PRS configured by the network device for the UE, performing downlink PRS reception and measurement according to the target measurement gap, includes:

according to UE positioning measurement capability information, determining to receive and measure the downlink PRS within the target duration, and not receive and process a downlink channel or a first downlink signal; or,
according to the UE positioning measurement capability information, determining to perform downlink PRS reception and measurement within the target duration, and receive and process the downlink channel or the first downlink signal;
wherein the first downlink signal is a downlink signal other than the downlink PRS.

9. The measurement method according to claim 6, wherein the method further includes: transmitting UE positioning measurement capability information to the network device;
in case of obtaining the target duration of the aperiodic downlink PRS or semi-persistent downlink PRS configured by the network device for the UE, performing downlink PRS reception and measurement according to the target measurement gap, includes:

determining the target measurement gap according to the UE positioning measurement capability information;
within the target measurement gap, performing downlink PRS reception and measurement.

10. The measurement method according to claim 9, wherein in case that the positioning measurement capability information includes: in the same sub-frame or slot, whether UE is able to simultaneously perform positioning measurement and downlink processing, determining the target measurement gap according to the UE positioning measurement capability information, includes:

in the same sub-frame or slot, in case that the UE is unable to simultaneously perform positioning measurement and downlink processing, determining the target measurement gap according to association between the UE positioning measurement capability information and configuration parameters of the measurement gap;
in the same sub-frame or slot, in case that the UE is able to simultaneously perform positioning measurement and downlink processing, determining the target measurement gap according to association between the UE positioning measurement capability information and configuration parameters of the measurement gap as well as a valid condition;
wherein the downlink processing includes downlink channel processing or processing of downlink signals other than downlink PRS.

11. The measurement method according to claim 10, wherein the valid condition includes:

in frequency division duplex mode, determining a first effective slot of a sub-frame where the aperiodic downlink PRS or semi-persistent downlink PRS is located, as the target measurement gap; wherein the first effective slot is a slot in which N1 OFDM symbols are reserved between the aperiodic downlink PRS or semi-persistent downlink PRS and a downlink channel or a first downlink signal in the same slot;
in time division duplex mode, determining a second effective slot of a slot where the aperiodic downlink PRS or semi-persistent downlink PRS is located, as the target measurement gap; wherein the second effective slot is a downlink slot in which N1 OFDM symbols are reserved between the aperiodic downlink PRS or semi-persistent downlink PRS and the downlink channel or the first downlink signal, or, the second effective slot is a flexible slot in which at least N2 OFDM symbols are reserved between uplink OFDM symbols before start of each downlink PRS resource and at least N2 OFDM symbols are reserved between uplink OFDM symbols after end of each downlink PRS resource;
wherein N1 and N2 are positive integers greater than or equal to 1.

12. The measurement method according to claim 6, wherein in case that the UE positioning measurement capability information includes: whether the UE is able to simultaneously perform positioning measurement and downlink processing in a downlink active bandwidth part, in different bandwidth parts of the same frequency band or in different frequency bands, performing downlink PRS reception and measurement according to the target measurement gap, includes:

performing the downlink PRS reception and measurement in the downlink active bandwidth part, in different bandwidth parts of the same frequency band or in different frequency bands, according to the UE positioning measurement capability information;

wherein the downlink processing includes downlink channel processing or processing of downlink signals other than downlink PRS.

13. A network device, comprising:

a configuration module configured to configure for a user equipment, UE, a target measurement gap for an aperiodic downlink PRS or a semi-persistent downlink PRS; wherein the target measurement gap is an aperiodic measurement gap or a semi-persistent measurement gap;

a determining module configured to determine the target measurement gap according to target message information, where the target message information is UE positioning measurement capability information reported by the UE.

14. A user equipment, UE, comprising:

an obtaining module configured to obtain a target measurement gap for an aperiodic downlink PRS or a semi-persistent downlink PRS, which is configured by a network device for the UE; wherein the target measurement gap is an aperiodic measurement gap or a semi-persistent measurement gap; and

a processing module configured to perform downlink PRS reception and measurement according to the target measurement gap;

wherein the target measurement gap is to be determined according to target information, wherein the target information is UE positioning measurement capability information which is to be reported by the UE.

**Patentansprüche**

1. Messkonfigurationsverfahren, das von einem Netzwerkgerät durchgeführt wird, umfassend:

Konfigurieren, für ein Benutzergerät, UE, einer Zielmesslücke für ein aperiodisches Downlink-PRS oder ein semi-persistentes Downlink-PRS;

wobei die Zielmesslücke eine aperiodische Messlücke oder eine semi-persistente Messlücke ist;

wobei das Verfahren ferner umfasst:

Bestimmen der Zielmesslücke gemäß Zielinformationen, wobei die Zielinformationen Informationen zur Positionsmessfähigkeit des UE sind, die von dem UE gemeldet werden.

2. Messkonfigurationsverfahren gemäß Anspruch 1, wobei eine Zeiteinheit der Zielmesslücke mit den von dem UE gemeldeten Informationen zur Positionsmessfähigkeit des UE verknüpft ist;

die Zeiteinheit der Zielmesslücke ein Subframe, ein Slot oder ein Orthogonal Frequency Division Multiplexing-, OFDM-, Symbol ist;

oder

wobei die Informationen zur Positionsmessfähigkeit des UE mindestens eines der folgenden Elemente umfassen:

ob das UE in demselben Subframe oder Slot in der Lage ist, gleichzeitig eine Positionsmessung und eine Downlink-Verarbeitung durchzuführen;

in einem aktivierten Downlink-Bandbreitenabschnitt, ob das UE in der Lage ist, gleichzeitig eine Positionsmessung und eine Downlink-Verarbeitung durchzuführen;

in verschiedenen Bandbreitenabschnitten desselben Frequenzbandes, ob das UE in der Lage ist, gleichzeitig eine Positionsmessung und eine Downlink-Verarbeitung durchzuführen; oder

in verschiedenen Frequenzbändern, ob das UE in der Lage ist, gleichzeitig eine Positionsmessung und eine Downlink-Verarbeitung durchzuführen;

wobei die Downlink-Verarbeitung die Downlink-Kanalverarbeitung oder die Verarbeitung von Downlink-Signalen außer Downlink-PRS umfasst.

3. Messkonfigurationsverfahren gemäß Anspruch 1, wobei die Konfiguration für das UE, die Zielmesslücke für das aperiodische Downlink-PRS oder das semi-persistente Downlink-PRS umfasst:

Senden eines Konfigurationsparameters der Zielmesslücke an das UE; und/oder

Konfigurieren einer Zieldauer des aperiodischen Downlink-PRS oder des semi-persistenten Downlink-PRS für das UE; wobei die Zieldauer ein Subframe, ein Slot oder ein OFDM-Symbol ist, in dem sich der aperiodische Downlink-PRS oder der semi-persistente Downlink-PRS befindet, und der Zielmesslücke durch Konfigurieren der Zieldauer konfiguriert wird.

4. Messkonfigurationsverfahren gemäß Anspruch 3, wobei in dem Fall, dass der Zielmesslücke der aperiodische Messlücke für das aperiodische Downlink-PRS ist, das Senden des Konfigurationsparameters der Zielmesslücke an das UE umfasst:

Bestimmen eines Minimalwerts der Startmomente der aperiodischen Ressourcensätze des Downlink-Positionierungsreferenzsignals PRS aus allen Downlink-Zellen als erstes Startmoment der aperiodischen Messlücke; Bestimmen eines Maximalwerts der Endzeitpunkte der aperiodischen Downlink-PRS-Ressourcensätze aus allen Downlink-Zellen als ersten Endzeitpunkt der aperiodischen Messlücke; Senden eines ersten Konfigurationsparameters der aperiodischen Messlücke an das UE; wobei der erste Konfigurationsparameter Folgendes umfasst: zwei beliebige der ersten Startzeitpunkte, der ersten Endzeitpunkte und einer ersten Dauer; und wobei die erste Dauer eine Dauer vom ersten Startzeitpunkt bis zum ersten Endzeitpunkt ist; oder wobei für den Fall, dass die Zielmesslücke die semi-persistente Messlücke für den semi-persistenten Downlink-PRS ist, das Senden des Konfigurationsparameters der Zielmesslücke an das UE Folgendes umfasst:

in einer semi-persistenten Downlink-PRS-Periode, das Bestimmen eines Minimalwerts der Startzeitpunkte von semi-persistenten Downlink-PRS-Ressourcensätzen aus allen Downlink-Zellen als zweiten Startzeitpunkt der semi-persistenten Messlücke; in der semi-persistenten Downlink-PRS-Periode, Bestimmen eines Maximalwerts der Endzeitpunkte der semi-persistenten Downlink-PRS-Ressourcensätze aus allen Downlink-Zellen als zweiten Endzeitpunkt der semi-persistenten Messlücke; Senden eines zweiten Konfigurationsparameters der semi-persistenten Messlücke an das UE; wobei der zweite Konfigurationsparameter umfasst: eine Wiederholungsperiode der semi-persistenten Messlücke und einen Konfigurationsparameter einer semi-persistenten Messlücke; wobei der Konfigurationsparameter der einen semi-persistenten Messlücke umfasst: zwei beliebige der folgenden Parameter: den zweiten Startzeitpunkt, den zweiten Endzeitpunkt und eine zweite Dauer; und wobei die zweite Dauer eine Dauer vom zweiten Startzeitpunkt bis zum zweiten Endzeitpunkt ist.

5. Messverfahren, das von einer Benutzerausrüstung (UE) durchgeführt wird, umfassend:

Erhalten einer Zielmesslücke für ein aperiodisches Downlink-PRS oder ein semi-persistentes Downlink-PRS, das von einem Netzwerkgerät für das UE konfiguriert wird; wobei die Zielmesslücke eine aperiodische Messlücke oder eine semi-persistente Messlücke ist; und Durchführen eines Downlink-PRS-Empfangs und einer Messung gemäß der Zielmesslücke; wobei die Zielmesslücke gemäß Zielinformationen zu bestimmen ist, wobei die Zielinformationen Informationen zur Positionsmessfähigkeit des UE sind, die von dem UE zu melden sind.

6. Messverfahren gemäß Anspruch 5, wobei das Ermitteln der Zielmesslücke für das aperiodische Downlink-PRS oder das semi-persistente Downlink-PRS, das vom Netzwerkgerät für das UE konfiguriert wird, Folgendes umfasst:

Empfangen eines vom Netzwerkgerät übertragenen Konfigurationsparameters der Zielmesslücke; und/oder

Erhalten einer Zieldauer des aperiodischen Downlink-PRS oder des semi-persistenten Downlink-PRS, die vom Netzwerkgerät für das UE konfiguriert wird; wobei die Zieldauer ein Subframe, ein Slot oder ein OFDM-Symbol ist, in dem sich der aperiodische Downlink-PRS oder der semi-persistente Downlink-PRS befindet, und die Zielmesslücke durch Konfigurieren der Zieldauer konfiguriert wird.

7. Messverfahren gemäß Anspruch 6, wobei das Empfangen des vom Netzwerkgerät übertragenen Konfigurationsparameters der Zielmesslücke umfasst:

Empfangen eines ersten Konfigurationsparameters der aperiodischen Messlücke für den vom Netzwerkgerät übertragenen aperiodischen Downlink-PRS;

wobei der erste Konfigurationsparameter zwei beliebige der folgenden Parameter umfasst: einen ersten Startzeitpunkt der aperiodischen Messlücke, einen ersten Endzeitpunkt der aperiodischen Messlücke und eine erste Dauer; und wobei die erste Dauer eine Dauer vom ersten Startzeitpunkt bis zum ersten Endzeitpunkt ist; oder

wobei das Empfangen des vom Netzwerkgerät übertragenen Konfigurationsparameters der Zielmesslücke Folgendes umfasst:

Empfangen eines zweiten Konfigurationsparameters der semi-persistenten Messlücke für den vom Netzwerkgerät übertragenen semi-persistenten Downlink-PRS;

wobei der zweite Konfigurationsparameter umfasst: eine Wiederholungsperiode der semi-persistenten Messlücke und einen Konfigurationsparameter einer semi-persistenten Messlücke;

wobei der Konfigurationsparameter der einen semi-persistenten Messlücke zwei beliebige der folgenden Parameter umfasst: den zweiten Startzeitpunkt der semi-persistenten Messlücke, den zweiten Endzeitpunkt der semi-persistenten Messlücke und eine zweite Dauer; und wobei die zweite Dauer eine Dauer vom zweiten Startzeitpunkt bis zum zweiten Endzeitpunkt ist.

8. Messverfahren gemäß Anspruch 6, wobei im Falle des Erhaltens der Zieldauer des aperiodischen Downlink-PRS oder des semi-persistenten Downlink-PRS, die vom Netzwerkgerät für das UE konfiguriert wurde, das Durchführen des Downlink-PRS-Empfangs und der Messung gemäß der Zielmesslücke Folgendes umfasst:

gemäß den Informationen zur Positionsmessfähigkeit des UE, die Entscheidung, den Downlink-PRS innerhalb der Zieldauer zu empfangen und zu messen und keinen Downlink-Kanal oder kein erstes Downlink-Signal zu empfangen und zu verarbeiten; oder

gemäß den Informationen zur Positionsmessfähigkeit des UE, das Bestimmen, den Downlink-PRS-Empfang und die Messung innerhalb der Zieldauer durchzuführen und den Downlink-Kanal oder das erste Downlink-Signal zu empfangen und zu verarbeiten;

wobei das erste Downlink-Signal ein anderes Downlink-Signal als das Downlink-PRS ist.

9. Messverfahren gemäß Anspruch 6, wobei das Verfahren ferner umfasst: Senden von Informationen zur Positionsmessfähigkeit des UE an das Netzwerkgerät;

im Falle des Erhaltens der Zieldauer des aperiodischen Downlink-PRS oder des semi-persistenten Downlink-PRS, das von der Netzwerkvorrichtung für das UE konfiguriert wurde, Durchführen des Downlink-PRS-Empfangs und der Messung gemäß der Zielmesslücke, einschließlich:

Bestimmen der Zielmesslücke gemäß den Informationen über die Positionsmessfähigkeit des UE;

innerhalb der Zielmesslücke Durchführen des Downlink-PRS-Empfangs und der Messung.

10. Messverfahren gemäß Anspruch 9, wobei für den Fall, dass die Informationen über die Positionsmessfähigkeit Folgendes umfassen: ob das UE in demselben Subframe oder Slot gleichzeitig eine Positionsmessung und eine Downlink-Verarbeitung durchführen kann, das Bestimmen der Zielmesslücke gemäß den Informationen über die Positionsmessfähigkeit des UE Folgendes umfasst:

in demselben Subframe oder Slot, falls das UE nicht in der Lage ist, gleichzeitig eine Positionsmessung und eine Downlink-Verarbeitung durchzuführen, das Bestimmen der Zielmesslücke gemäß der Zuordnung zwischen den Informationen über die Positionsmessfähigkeit des UE und den Konfigurationsparametern der Messlücke;

in demselben Subframe oder Slot, falls das UE in der Lage ist, gleichzeitig eine Positionsmessung und eine Downlink-Verarbeitung durchzuführen, das Bestimmen der Zielmesslücke gemäß der Zuordnung zwischen den Informationen zur Positionsmessfähigkeit des UE und den Konfigurationsparametern der Messlücke sowie einer gültigen Bedingung;

wobei die Downlink-Verarbeitung die Downlink-Kanalverarbeitung oder die Verarbeitung von Downlink-Signalen außer Downlink-PRS umfasst.

11. Messverfahren gemäß Anspruch 10, wobei die gültige Bedingung Folgendes umfasst:

im Frequenzduplexmodus, Bestimmen eines ersten effektiven Slots eines Subframes, in dem sich der aperiodische Downlink-PRS oder semi-persistente Downlink-PRS befindet, als Zielmesslücke; wobei der erste effektive Slot ein Slot ist, in dem N1 OFDM-Symbole zwischen dem aperiodischen Downlink-PRS oder semi-persistenten Downlink-PRS und einem Downlink-Kanal oder einem ersten Downlink-Signal im selben Slot reserviert sind;

im Zeitduplexmodus, Bestimmen eines zweiten effektiven Slots eines Slots, in dem sich das aperiodische Downlink-PRS oder das semi-persistente Downlink-PRS befindet, als Zielmessungslücke; wobei der zweite effektive Slot ein Downlink-Slot ist, in dem N1 OFDM-Symbole zwischen dem aperiodischen Downlink-PRS oder dem semi-persistenten Downlink-PRS und dem Downlink-Kanal oder dem ersten Downlink-Signal reserviert sind, oder der zweite effektive Slot ein flexibler Slot ist, in dem mindestens N2 OFDM-Symbole zwischen den Uplink-OFDM-Symbolen vor Beginn jeder Downlink-PRS-Ressource und mindestens N2 OFDM-Symbole zwischen den Uplink-OFDM-Symbolen nach Ende jeder Downlink-PRS-Ressource reserviert sind;

wobei N1 und N2 positive ganze Zahlen größer oder gleich 1 sind.

12. Messverfahren gemäß Anspruch 6, wobei für den Fall, dass die Informationen über die Positionsmessfähigkeit des UE umfasst: ob das UE in der Lage ist, gleichzeitig Positionsmessung und Downlink-Verarbeitung in einem aktiven Downlink-Bandbreitenabschnitt, in verschiedenen Bandbreitenabschnitten desselben Frequenzbandes oder in verschiedenen Frequenzbändern durchzuführen, das Durchführen des Downlink-PRS-Empfangs und der Messung gemäß der Zielmesslücke umfasst:

Durchführen des Downlink-PRS-Empfangs und der Messung in dem aktiven Downlink-Bandbreitenabschnitt, in verschiedenen Bandbreitenabschnitten desselben Frequenzbands oder in verschiedenen Frequenzbändern gemäß den Informationen über die Positionsmessfähigkeit des UE;

wobei die Downlink-Verarbeitung die Downlink-Kanalverarbeitung oder die Verarbeitung von anderen Downlink-Signalen als dem Downlink-PRS umfasst.

13. Netzwerkgerät, umfassend:

ein Konfigurationsmodul, das so konfiguriert ist, dass es für ein Benutzergerät, UE, eine Zielmesslücke für ein aperiodisches Downlink-PRS oder ein semi-persistentes Downlink-PRS konfiguriert; wobei die Zielmesslücke eine aperiodische Messlücke oder eine semi-persistente Messlücke ist;

ein Bestimmungsmodul, das so konfiguriert ist, dass es die Zielmesslücke gemäß Zielnachrichteninformationen bestimmt, wobei die Zielnachrichteninformationen Informationen zur Positionsmessfähigkeit des UE sind, die von dem UE gemeldet werden.

14. Benutzergerät, UE, umfassend:

ein Erfassungsmodul, das so konfiguriert ist, dass es eine Zielmesslücke für einen aperiodischen Downlink-PRS oder einen semi-persistenten Downlink-PRS erfasst, die von einem Netzwerkgerät für das UE konfiguriert wird;

wobei die Zielmesslücke eine aperiodische Messlücke oder eine semi-persistente Messlücke ist; und

ein Verarbeitungsmodul, das so konfiguriert ist, dass es den Downlink-PRS-Empfang und die Messung gemäß der Zielmesslücke durchführt;

wobei die Zielmesslücke gemäß Zielinformationen zu bestimmen ist, wobei die Zielinformationen Informationen zur Positionsmessfähigkeit des UE sind, die vom UE zu melden sind.

## Revendications

1. Procédé de configuration de mesure, mis en œuvre par un dispositif de réseau, comprenant de :

configurer, pour un équipement d'utilisateur, UE, un intervalle de mesure cible pour un PRS de liaison descendante apériodique ou un PRS de liaison descendante semi persistant ;

dans lequel l'intervalle de mesure cible est un intervalle de mesure apériodique ou un intervalle de mesure semi persistant ;

dans lequel le procédé comporte en outre de :

déterminer l'intervalle de mesure cible en fonction d'informations cibles, dans lequel les informations cibles sont des informations sur la capacité de mesure de positionnement d'UE rapportées par l'UE.

**2.** Procédé de configuration de mesure selon la revendication 1, dans lequel une unité de temps de l'intervalle de mesure cible est associée aux informations sur la capacité de mesure de positionnement d'UE rapportées par l'UE ;

l'unité de temps de l'intervalle de mesure cible est une sous-trame, un créneau ou un symbole de multiplexage par répartition orthogonale de la fréquence, OFDM ;
ou
dans lequel les informations sur la capacité de mesure de positionnement d'UE comportent au moins une parmi :

dans la même sous-trame ou le même créneau, l'information de savoir si l'UE est capable de réaliser simultanément une mesure de positionnement et un traitement de liaison descendante ;
dans une partie de largeur de bande activée en liaison descendante, l'information de savoir si l'UE est capable de réaliser simultanément une mesure de positionnement et un traitement de liaison descendante ;
dans différentes parties de largeur de bande de la même bande de fréquences, l'information de savoir si l'UE est capable de réaliser simultanément une mesure de positionnement et un traitement de liaison descendante ; ou
dans différentes bandes de fréquences, l'information de savoir si l'UE est capable de réaliser simultanément une mesure de positionnement et un traitement de liaison descendante ;
dans lequel le traitement de liaison descendante comporte un traitement de canal de liaison descendante ou un traitement de signaux de liaison descendante autres que le PRS de liaison descendante.

**3.** Procédé de configuration de mesure selon la revendication 1, dans lequel la configuration pour l'UE, de l'intervalle de mesure cible pour le PRS de liaison descendante apériodique ou le PRS de liaison descendante semi persistant, comporte de :

transmettre un paramètre de configuration de l'intervalle de mesure cible à l'UE ;
et/ou
configurer une durée cible du PRS de liaison descendante apériodique ou du PRS de liaison descendante semi persistant pour l'UE ; dans lequel la durée cible est une sous-trame, un créneau ou un symbole OFDM où le PRS de liaison descendante apériodique ou le PRS de liaison descendante semi persistant est situé, et l'intervalle de mesure cible est configuré en configurant la durée cible.

**4.** Procédé de configuration de mesure selon la revendication 3, dans lequel, dans un cas où l'intervalle de mesure cible est l'intervalle de mesure apériodique pour le PRS de liaison descendante apériodique, la transmission du paramètre de configuration de l'intervalle de mesure cible à l'UE comporte de :

déterminer une valeur minimale d'instants de début d'ensembles de ressources de signal de référence de positionnement, PRS, de liaison descendante apériodique à partir de toutes les cellules de liaison descendante, comme étant un premier instant de début de l'intervalle de mesure apériodique ;
déterminer une valeur maximale d'instants de fin des ensembles de ressources PRS de liaison descendante apériodique à partir de toutes les cellules de liaison descendante, comme étant un premier instant de fin de l'intervalle de mesure apériodique ;
transmettre à l'UE un premier paramètre de configuration de l'intervalle de mesure apériodique ;
dans lequel le premier paramètre de configuration comporte : deux quelconques parmi le premier instant de début, le premier instant de fin, et une première durée ; et la première durée est une durée allant du premier instant de début au premier instant de fin ;
ou
dans lequel dans un cas où l'intervalle de mesure cible est l'intervalle de mesure semi persistant pour le PRS de liaison descendante semi persistant, la transmission du paramètre de configuration de l'intervalle de mesure cible à l'UE comporte de :

dans une période de PRS de liaison descendante semi persistant, déterminer une valeur minimale d'instants de début d'ensembles de ressources PRS de liaison descendante semi persistant à partir de toutes les cellules de liaison descendante, comme étant un second instant de début de l'intervalle de mesure semi persistant ;
dans la période de PRS de liaison descendante semi persistant, déterminer une valeur maximale d'instants de fin d'ensembles de ressources PRS de liaison descendante semi persistant à partir de toutes les cellules de liaison descendante, comme étant un second instant de fin de l'intervalle de mesure semi persistant ;
transmettre à l'UE un second paramètre de configuration de l'intervalle de mesure semi persistant ;

dans lequel le second paramètre de configuration comporte : une période de répétition de l'intervalle de mesure semi persistant et un paramètre de configuration d'un intervalle de mesure semi persistant ;

le paramètre de configuration de l'intervalle de mesure semi persistant comporte : deux quelconques parmi le second instant de début, le second instant de fin et une seconde durée ; et la seconde durée est une durée allant du second instant de début au second instant de fin.

5. Procédé de mesure, mis en œuvre par un équipement d'utilisateur, UE, comprenant de :

obtenir un intervalle de mesure cible pour un PRS de liaison descendante apériodique ou un PRS de liaison descendante semi persistant, qui est configuré par un dispositif de réseau pour l'UE ; dans lequel l'intervalle de mesure cible est un intervalle de mesure apériodique ou un intervalle de mesure semi persistant ; et réaliser une réception et une mesure de PRS de liaison descendante en fonction de l'intervalle de mesure cible ; dans lequel l'intervalle de mesure cible doit être déterminé en fonction des informations cibles, dans lequel les informations cibles sont des informations sur la capacité de mesure de positionnement d'UE qui doivent être rapportées par l'UE.

6. Procédé de mesure selon la revendication 5, dans lequel l'obtention de l'intervalle de mesure cible pour le PRS de liaison descendante apériodique ou le PRS de liaison descendante semi persistant, qui est configuré par le dispositif de réseau pour l'UE, comporte de :

recevoir un paramètre de configuration de l'intervalle de mesure cible transmis par le dispositif de réseau ; et/ou

obtenir une durée cible du PRS de liaison descendante apériodique ou du PRS de liaison descendante semi persistant configuré par le dispositif de réseau pour l'UE ; dans lequel la durée cible est une sous-trame, un créneau ou un symbole OFDM où le PRS de liaison descendante apériodique ou le PRS de liaison descendante semi persistant est situé, et l'intervalle de mesure cible est configuré en configurant la durée cible.

7. Procédé de mesure selon la revendication 6, dans lequel la réception du paramètre de configuration de l'intervalle de mesure cible transmis par le dispositif de réseau, comporte de :

recevoir un premier paramètre de configuration de l'intervalle de mesure apériodique pour le PRS de liaison descendante apériodique transmis par le dispositif de réseau ;

dans lequel le premier paramètre de configuration comporte deux quelconques parmi un premier instant de début de l'intervalle de mesure apériodique, un premier instant de fin de l'intervalle de mesure apériodique et une première durée ; et la première durée est une durée allant du premier instant de début au premier instant de fin ;

ou

dans lequel la réception du paramètre de configuration de l'intervalle de mesure cible transmis par le dispositif de réseau comporte de :

recevoir un second paramètre de configuration de l'intervalle de mesure semi persistant pour le PRS de liaison descendante semi persistant transmis par le dispositif de réseau ;

dans lequel le second paramètre de configuration comporte : une période de répétition de l'intervalle de mesure semi persistant et un paramètre de configuration d'un intervalle de mesure semi persistant ;

le paramètre de configuration de l'intervalle de mesure semi persistant comporte deux quelconques parmi le second instant de début de l'intervalle de mesure semi persistant, le second instant de fin de l'intervalle de mesure semi persistant et une seconde durée ; et la seconde durée est une durée allant du second instant de début au second instant de fin.

8. Procédé de mesure selon la revendication 6, dans lequel en cas d'obtention de la durée cible du PRS de liaison descendante apériodique ou du PRS de liaison descendante semi persistant configuré par le dispositif de réseau pour l'UE, la réalisation d'une réception et d'une mesure de PRS de liaison descendante en fonction de l'intervalle de mesure cible comporte de :

en fonction d'informations sur la capacité de mesure de positionnement d'UE, déterminer qu'il faut recevoir et mesurer le PRS de liaison descendante sur la durée cible, et ne pas recevoir et traiter un canal de liaison descendante ou un premier signal de liaison descendante ;

ou

en fonction des informations sur la capacité de mesure de positionnement d'UE, déterminer qu'il faut réaliser une réception et une mesure de PRS de liaison descendante sur la durée cible, et recevoir et traiter le canal de liaison descendante ou le premier signal de liaison descendante ;

dans lequel le premier signal de liaison descendante est un signal de liaison descendante autre que le PRS de liaison descendante.

**9.** Procédé de mesure selon la revendication 6, dans lequel le procédé comporte en outre de : transmettre des informations sur la capacité de mesure de positionnement d'UE au dispositif de réseau ;

en cas d'obtention de la durée cible du PRS de liaison descendante apériodique ou du PRS de liaison descendante semi persistant configuré par le dispositif de réseau pour l'UE, la réalisation d'une réception et d'une mesure de PRS de liaison descendante en fonction de l'intervalle de mesure cible comportent de :

déterminer l'intervalle de mesure cible en fonction des informations sur la capacité de mesure du positionnement d'UE ;

dans l'intervalle de mesure cible, réaliser une réception et une mesure de PRS de liaison descendante.

**10.** Procédé de mesure selon la revendication 9, dans lequel, dans un cas où les informations sur la capacité de mesure de positionnement comportent : dans la même sous-trame ou le même créneau, l'information de savoir si l'UE est capable de réaliser simultanément une mesure de positionnement et un traitement de liaison descendante, la détermination de l'intervalle de mesure cible en fonction des informations sur la capacité de mesure de positionnement d'UE, comporte de :

dans la même sous-trame ou le même créneau, dans un cas où l'UE n'est pas capable de réaliser simultanément une mesure de positionnement et un traitement de liaison descendante, déterminer l'intervalle de mesure cible en fonction d'une association entre les informations sur la capacité de mesure de positionnement d'UE et des paramètres de configuration de l'intervalle de mesure ;

dans la même sous-trame ou le même créneau, dans un cas où l'UE est capable de réaliser simultanément une mesure de positionnement et un traitement de liaison descendante, déterminer l'intervalle de mesure cible en fonction d'une association entre les informations sur la capacité de mesure de positionnement d'UE et des paramètres de configuration de l'intervalle de mesure, ainsi qu'une condition valide ;

dans lequel le traitement de liaison descendante comporte un traitement de canal de liaison descendante ou un traitement de signaux de liaison descendante autres que le PRS de liaison descendante.

**11.** Procédé de mesure selon la revendication 10, dans lequel la condition valide comporte :

en mode duplex à répartition en fréquence, déterminer un premier créneau effectif d'une sous-trame où le PRS de liaison descendante apériodique ou le PRS de liaison descendante semi persistant est situé, comme étant l'intervalle de mesure cible ; dans lequel le premier créneau effectif est un créneau dans lequel N1 symboles OFDM sont réservés entre le PRS de liaison descendante apériodique ou le PRS de liaison descendante semi persistant, et un canal de liaison descendante ou un premier signal de liaison descendante dans le même créneau ;

en mode duplex à répartition dans le temps, déterminer un second créneau effectif d'un créneau où le PRS de liaison descendante apériodique ou le PRS de liaison descendante semi persistant est situé, comme étant l'intervalle de mesure cible, dans lequel le second intervalle effectif est un intervalle de liaison descendante dans lequel N1 symboles OFDM sont réservés entre le PRS de liaison descendante apériodique ou le PRS de liaison descendante semi persistant, et le canal de liaison descendante ou le premier signal de liaison descendante, ou le second créneau effectif est un créneau flexible dans lequel au moins N2 symboles OFDM sont réservés entre des symboles OFDM de liaison montante avant le début de chaque ressource PRS de liaison descendante et au moins N2 symboles OFDM sont réservés entre des symboles OFDM de liaison montante après la fin de chaque ressource PRS de liaison descendante ;

dans lequel N1 et N2 sont des entiers positifs supérieurs ou égaux à 1.

**12.** Procédé de mesure selon la revendication 6, dans lequel, dans un cas où les informations sur la capacité de mesure de positionnement d'UE comportent : l'information de savoir si l'UE est capable de réaliser simultanément une mesure de positionnement et un traitement de liaison descendante dans une partie de largeur de bande active de liaison descendante, dans différentes parties de largeur de bande de fréquence de la même bande de fréquence ou dans différentes bandes de fréquences, la réalisation d'une réception et d'une mesure de PRS de liaison descendante en fonction de l'intervalle de mesure cible, comporte de :

réaliser la réception et la mesure de PRS de liaison descendante dans la partie de largeur de bande active de liaison descendante, dans différentes parties de largeur de bande de la même bande de fréquences ou dans différentes bandes de fréquences, en fonction des informations sur la capacité de mesure de positionnement d'UE ;

dans lequel le traitement de liaison descendante comporte un traitement de canal de liaison descendante ou un traitement de signaux de liaison descendante autres que le PRS de liaison descendante.

13. Dispositif de réseau, comprenant :

un module de configuration configuré pour configurer pour un équipement d'utilisateur, UE, un intervalle de mesure cible pour un PRS de liaison descendante apériodique ou un PRS de liaison descendante semi persistant ; dans lequel l'intervalle de mesure cible est un intervalle de mesure apériodique ou un intervalle de mesure semi persistant ;
un module de détermination configuré pour déterminer l'intervalle de mesure cible en fonction d'informations de messages cibles, où les informations de messages cibles sont des informations sur la capacité de mesure de positionnement d'UE rapportées par l'UE.

14. Équipement d'utilisateur, UE, comprenant :

un module d'obtention configuré pour obtenir un intervalle de mesure cible pour un PRS de liaison descendante apériodique ou un PRS de liaison descendante semi persistant, qui est configuré par un dispositif de réseau pour l'UE ; dans lequel l'intervalle de mesure cible est un intervalle de mesure apériodique ou un intervalle de mesure semi persistant ; et
un module de traitement configuré pour réaliser une réception et une mesure de PRS de liaison descendante en fonction de l'intervalle de mesure cible ;
dans lequel l'intervalle de mesure cible doit être déterminé en fonction d'informations cibles, dans lequel les informations cibles sont des informations sur la capacité de mesure de positionnement d'UE qui doivent être rapportées par l'UE.

onfiguring for a user equipment (UE), a target measurement gap for an aperiodic downlink PRS or a semi-persistent downlink PRS

11

FIG. 1

downlink PRS resource set of TRP#1

downlink PRS resource set o f TRP#2

downlink PRS resource set o f TRP#N

...... ......

duration L1 of aperiodic measurement gap

starting moment T1 of aperiodic measurement gap

end moment T2 of aperiodic measurement gap

FIG. 2

downlink PRS
1
resource set
n
downlink PRS

downlink
PRS resource
of
downlink PRS
n
of
downlink
of

uration L          persistent

starting  moment  T1
of       semi persistent

end  moment  T   of

T
persistent

downlink          persistent

of          semi

persistent measurement gap

FIG. 3

configuration module
**410**
**410**

FIG. 4

processor `400`

memory `420`

bus interface

transceiver `410`

FIG. 5

obtaining a target measurement gap for an aperiodic downlink PRS or a semi-persistent downlink PRS, which is configured by a network device for a user equipment (UE) 61

performing downlink PRS reception and measurement according to the target measurement gap 62

FIG. 6

obtaining module 710

processing module 720

700

FIG. 7

processor 81

memory 83

bus interface 82

transceiver 84

user interface 85

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020191646 A1

**Non-patent literature cited in the description**

- Potential Enhancements for NR Rel-17 Positioning. *R1-2006810*

- Discussion on potential positioning enhancements. *R1-2005381*